# EUROPEAN PATENT SPECIFICATION

(11) **EP 4 314 155 B1**
(45) Date of publication and mention of the grant of the patent: **09.04.2025**
(21) Application number: 22717149.3
(22) Date of filing: 23.03.2022
(51) Int. Cl.: C08L 53/00, C09D 153/00

(54) **POLYMER COMPOSITION COMPRISING POLYACRYLIC BLOCK COPOLYMER AND AROMATIC BASED POLYALKYLENEOXIDE AS DISPERSANT**
POLYMERZUSAMMENSETZUNG MIT POLYACRYL-BLOCKCOPOLYMER UND AROMASTOFFBASIERTEM POLYALKYLENOXID ALS DISPERGIERMITTEL
COMPOSITION POLYMÈRE COMPRENANT UN COPOLYMÈRE À BLOCS POLYACRYLIQUES ET UN POLYALKYLNÉOXYDE À BASE AROMATIQUE COMME DISPERSANT

(30) Priority: 26.03.2021 EP 21165178
(43) Date of publication of application: 07.02.2024
(73) Proprietor: BASF SE, 67056 Ludwigshafen am Rhein (DE)
(72) Inventor: KOU, Huiguang, 67056 Ludwigshafen (DE); ONCLIN, Steffen, 67056 Ludwigshafen (DE); WILLENBACHER, Johannes Hermann, 67056 Ludwigshafen (DE); AUSCHRA, Clemens, 67056 Ludwigshafen (DE)
(74) Representative: BASF IP Association
(86) International application number: PCT/EP2022/057569
(87) International publication number: WO 2022/200398

(56) References cited:
- WO-A1-2020/035300

## Description

### Field of the invention

The presently claimed invention relates to a polymer composition comprising at least one polyacrylic block copolymer and at least one aromatic based polyalkyleneoxide. The presently claimed invention is directed to a liquid composition in the form of a dispersion comprising the polymer composition. The presently claimed invention is also directed to a coating composition comprising the polymer composition as a dispersant.

### Background of the invention

Dispersions containing fine particulate solid materials such as pigments are widely used, e.g. as coating compositions, as printing inks, for preparing paint systems such as automotive, industrial and decorative paints, for coloring materials such as plastics and glasses and for manufacturing cosmetic compositions. An ideal dispersion consists of a homogenous and stable suspension of solid materials after size reduction or milling of any aggregates and agglomerates.

A dispersant improves various dispersion properties such as millbase viscosity and rheology behavior. The dispersant is also a determining factor of the aesthetics and physical properties of a coating. A dispersant can act as a flow control agent and bring about improved spreading of the coating composition over the surface of the substrate and improve the flow of the polymer film which forms in the course of curing, resulting in a smooth surface. As a consequence, the dispersant reduces the formation of defects, known as craters, which are caused by impurities acting from the outside or by impurities on the surface of the substrate.

It is well-known that pigments such as carbon black tend to re-aggregate over a period of time, thus leading to an inhomogeneity in the coating composition, and loss in gloss orjetness properties and a detrimental increase in viscosity in the compositions.

Due to increase environmental concerns, there is a growing need for coating compositions that can be formulated using water or predominantly water as solvent and dispersants play a very important role in providing stable, water-based coating compositions.

In view of the wide application of dispersions containing fine particulate solid materials and the important role played by the dispersants in their preparation, stability and properties, there is a growing need for improved dispersants that are capable of assisting the preparation of dispersions having the desired characteristics.

The controlled free radical polymerisation (CFRP) is a tool to tailor the microstructure of polymers (e.g. block copolymers) in a way that is favourable for dispersing and stabilizing pigments. With the CFRP-process a large row of different polymer materials for either waterborne or also solvent-borne high solids systems have become available.

However, the use of polymers obtained by CFPR process are associated with some limitations such as high viscosity of millbase, which limits the amount of pigment concentration in millbase, crater issue in some let down systems. The usefulness of the polymer obtained by CFRP as a dispersant can be further improved to modify overall functioning and solubility in water based coatings.

Accordingly, it is an object of the presently claimed invention to provide a dispersant having improved properties such as a low millbase viscosity, and which provides a coating composition having improved coating properties without adversely affecting its color properties.

### Summary of the invention

It was surprisingly found that a polymer composition comprising at least one polyacrylic block copolymer and at least one aromatic based polyalkyleneoxide provides a dispersant having improved dispersion properties such as a low millbase viscosity. The coating compositions comprising the polymer composition of the presently claimed invention provides surface coats having favourable properties such as a low crater ranking. Further, the dispersant composition does not adversely affect the color properties of the coating composition.

Accordingly, one aspect of the presently claimed invention is a polymer composition comprising
a) at least one polyacrylic block copolymer in the range from 10 to 90 wt% based on the total weight of the composition,
   wherein the at least one polyacrylic block copolymer is obtainable by reacting
   i) polymer (A) obtainable by controlled free radical polymerization of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid,
      in the presence of either a1 or a2,
      wherein
      a1 is at least one nitroxylether of formula (I)

         R¹R²NOX (I),

         and
      a2 is at least one stable free nitroxyl radical of formula (II)

         R¹R²NO• (II);
      wherein
      R¹ and R² are independently selected from substituted or unsubstituted, linear or branched C₅-C₁₈ alkyl, or R¹ and R² together with the nitrogen atom to which they are attached form an unsubstituted or substituted 5- to 10-membered aliphatic ring comprising 1 to 3 heteroatom(s) selected from nitrogen and oxygen, and
      X is selected from -CH₂-phenyl, -CH(CH₃)-phenyl, - C(CH₃)₂-phenyl, -(C₅-C₆ cycloalkyl)₂C-CN, -(CH₃)₂CCN, -CH₂CH=CH₂, -CH₃CH-CH=CH₂, -(C₁-C₄alkyl)CR³-C(O)-phenyl, -(C₁-C₄)alkyl-CR³-C(O)-(C₁-C₄)alkoxy, -(C₁-C₄)alkyl-CR³-C(O)-(C₁-C₄)alkyl, -(C₁-C₄)alkyl-CR³-C(O)-N-di(C₁-C₄)alkyl, -(C₁-C₄)alkyl-CR³-C(O)-N H(C₁-C₄)alkyl, and -(C₁-C₄)alkyl-CR³-C(O)-NH₂,
      wherein R³ is hydrogen or (C₁-C₄)alkyl;
         with
   ii) at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds;
      and
b) at least one aromatic based polyalkyleneoxide in the range from 10 to 90 wt% based on the total weight of the composition,
   wherein the at least one aromatic based polyalkyleneoxide is obtainable by reacting
   (i) at least one monoamine functionalized polyalkyleneoxide of formula (III)

      T-(O-P)ₙ-NH₂ (III)

      wherein P is a substituted or unsubstituted, linear or branched C₁-C₄ alkylene, or a mixture of C₁-C₄ alkylene, and
      T is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl and n is an integer in the range of 1 to 150;
         with
   (ii) at least one aromatic compound of the formula (IV) 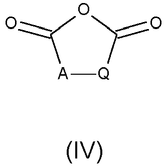 wherein
      - Q: is a chemical bond or a divalent moiety selected from -O-, -NH- and -S-,
      - A: is an unsubstituted or substituted aromatic group selected from the formula 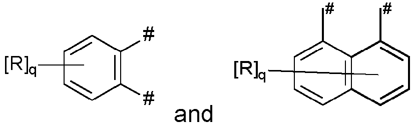
      wherein # indicates the point of attachment to the rest of the molecule, and
      - q: is 0, 1, 2, 3 or 4,
      - R: is independently selected from halogen, NO₂, OH, C₁-C₄-alkyl, C₁-C₄-alkoxy, CONH₂, NH-CHO, NH-C₁-C₄-alkyl, and NH-(C=O)-C₁-C₄-alkyl.

Another aspect of the presently claimed invention is directed to a method for preparing the polymer composition of the present invention comprising the steps of
(i) obtaining at least one polyacrylic block copolymer and at least one aromatic based polyalkyleneoxide as defined above, and
(ii) mixing 10 wt% to 90 wt% of the at least one polyacrylic block copolymer and 10 wt% to 90 wt% of the at least one aromatic based polyalkyleneoxide, both based on the total weight of the composition, to obtain the polymer composition.

Another aspect of the presently claimed invention is directed to a liquid composition in the form of a dispersion comprising
a. a particulate solid material selected from pigments, silica and fillers, and
b. a liquid diluent comprising the polymer composition according to the presently claimed invention.

Another aspect of the presently claimed invention is directed to a coating composition comprising the dispersant composition of the presently claimed invention.

Another aspect of the presently claimed invention is directed to use of the polymer composition of the presently claimed invention as a dispersant in a coating composition.

### Detailed Description

Before the present compositions and formulations of the presently claimed invention are described, it is to be understood that this invention is not limited to particular compositions and formulations described, since such compositions and formulation may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well i.e. a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment but may refer to so.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

Accordingly, the one aspect of the presently claimed invention is a polymer composition comprising
a) at least one polyacrylic block copolymer in the range from 10 to 90 wt% based on the total weight of the composition,
   wherein the at least one polyacrylic block copolymer is obtainable by reacting
   i) polymer (A) obtainable by controlled free radical polymerization of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid,
      in the presence of either a1 or a2,
      wherein
      a1 is at least one nitroxylether of formula (I)

         R¹R²NOX (I),

         and
      a2 is at least one stable free nitroxyl radical of formula (II)

         R¹R²NO• (II);
      wherein
      R¹ and R² are independently selected from substituted or unsubstituted, linear or branched C₅-C₁₈ alkyl, or R¹ and R² together with the nitrogen atom to which they are attached form an unsubstituted or substituted 5- to 10-membered aliphatic ring comprising 1 to 3 heteroatom(s) selected from nitrogen and oxygen, and
      X is selected from -CH₂-phenyl, - CH(CH₃)-phenyl, -C(CH₃)₂-phenyl, -(C₅-C₆ cycloalkyl)₂C-CN, -(CH₃)₂CCN, -CH₂CH=CH₂, -CH₃CH-CH=CH₂, -(C₁-C₄alkyl)CR³-C(O)-phenyl, -(C₁-C₄)alkyl-CR³-C(O)-(C₁-C₄)alkoxy, -(C₁-C₄)alkyl-CR³-C(O)-(C₁-C₄)alkyl, -(C₁-C₄)alkyl-CR³-C(O)-N-di(C₁-C₄)alkyl, -(C₁-C₄)alkyl-CR³-C(O)-NH(C₁-C₄)alkyl, and -(C₁-C₄)alkyl-CR³-C(O)-NH₂, wherein R³ is hydrogen or (C₁-C₄)alkyl;
      with
   ii) at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds; and
b) at least one aromatic based polyalkyleneoxide in the range from 10 to 90 wt% based on the total weight of the composition,
   wherein the at least one aromatic based polyalkyleneoxide is obtainable by reacting
   (i) at least one monoamine functionalized polyalkyleneoxide of formula (III)

      T-(O-P)ₙ-NH₂ (III)

      wherein P is a substituted or unsubstituted, linear or branched C₁-C₄ alkylene, or a mixture of C₁-C₄ alkylene, and
      T is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl and n is an integer in the range of 1 to 150;
      with
   (ii) at least one aromatic compound of the formula (IV) 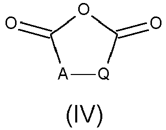 wherein
      - Q: is a chemical bond or a divalent moiety selected from -O-, -NH- and -S-,
      - A: is an unsubstituted or substituted aromatic group selected from the formula 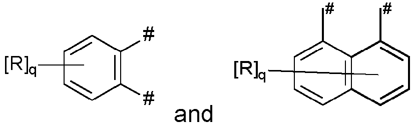
      wherein # indicates the point of attachment to the rest of the molecule, and
      - q: is 0, 1, 2, 3 or 4,
      - R: is independently selected from halogen, NO₂, OH, C₁-C₄-alkyl, C₁-C₄-alkoxy, CONH₂, NH-CHO, NH-C₁-C₄-alkyl, and NH-(C=O)-C₁-C₄-alkyl.

Within the context of the presently claimed invention, the term alkyl, as used herein, refers to an acylic saturated aliphatic groups, including linear alkyl saturated hydrocarbon radical denoted by a general formula CₙH₂ₙ₊₁ and wherein n is the number of carbon atoms 1, 2, 3, 4 etc.

Examples of linear unsubstituted C₁ to C₂₂ alkyl are methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, icosyl, henicosyl and docosyl.

Examples of branched unsubstituted C₁ to C₂₂ alkyl are 1-methyl ethyl, 1-methyl propyl, 2-methyl propyl, 1-methyl butyl, 2-methyl butyl, 3-methyl butyl, 1-methyl pentyl, 2-methyl pentyl, 3-methyl pentyl, 4-methyl pentyl, 1-methyl hexyl, 2-methyl hexyl, 3-methyl hexyl, 4-methyl hexyl, 5-methyl hexyl, 1-methyl heptyl, 2-methyl heptyl, 3-methyl heptyl, 4-methyl heptyl, 5-methyl heptyl, 6-methyl heptyl, 1-methyl octyl, 2-methyl octyl, 3-methyl octyl, 4-methyl octyl, 5-methyl octyl, 6-methyl octyl, 7-methyl octyl, 1-methyl nonyl, 2-methyl nonyl, 3-methyl nonyl, 4-methyl nonyl, 5-methyl nonyl, 6-methyl nonyl, 7-methyl nonyl, 8-methyl nonyl, 1-methyl decyl, 2-methyl decyl, 3-methyl decyl, 4-methyl decyl, 5-methyl decyl, 6-methyl decyl, 7-methyl decyl, 8-methyl decyl, 9-methyl decyl, 1-methyl undecyl, 2-methyl undecyl, 3-methyl undecyl, 4-methyl undecyl, 5-methyl undecyl, 6-methyl undecyl, 7-methyl undecyl, 8-methyl undecyl, 9-methyl undecyl, 10-methyl undecyl, 1-ethyl propyl, 1-ethyl butyl, 2-ethyl butyl, 1-ethyl pentyl, 2-ethyl pentyl, 3-ethyl pentyl, 1-ethyl hexyl, 2-ethyl hexyl, 3-ethyl hexyl, 4-ethyl hexyl, 1-ethyl heptyl, 2-ethyl heptyl, 3-ethyl heptyl, 4-ethyl heptyl, 5-ethyl heptyl, 1-ethyl octyl, 2-ethyl octyl, 3-ethyl octyl, 4-ethyl octyl, 5-ethyl octyl, 6-ethyl octyl, 1-propyl butyl, 1-propyl pentyl, 2-propyl pentyl, 1-octyl nonyl, 1-octyl decyl, 2-octyl decyl, 1-octyl undecyl, 2-octyl undecyl, 3-octyl undecyl, 1-octyl dodecyl, 2-octyl dodecyl, 3-octyl dodecyl and 4-octyl dodecyl.

Within the context of the presently claimed invention, the term hydroxy-C₁-C₆-alkyl refers to alkyl having 1 to 6 carbon atoms (as defined above), wherein one hydrogen atom of the alkyl radical is replaced by a hydroxy group. Examples of hydroxy-C₁-C₆ alkyl are 1- hydroxy ethyl, 1- hydroxy propyl, 2- hydroxy propyl, 1- hydroxy butyl, 2- hydroxy butyl, 3- hydroxy butyl, 1-hydroxy pentyl, 2- hydroxy pentyl, 3- hydroxy pentyl, 4- hydroxy pentyl, 1- hydroxy hexyl, 2-hydroxy hexyl, 3- hydroxy hexyl, 4- hydroxy hexyl and 5-hydroxy hexyl.

Within the context of the presently claimed invention, the term cycloalkyl, as used herein, refers to a monocyclic and a bicyclic 3 to 10 membered saturated cycloaliphatic groups, including branched cycloalkyl saturated hydrocarbon. Preferably, the cycloalkyl refers to C₁ to C₆ carbon atoms, selected from the group consisting of cyclopropyl, cyclobutyl, cyclopentyl and cyclohexyl.

Within the context of the presently claimed invention, the term alkylene refers to an acyclic saturated hydrocarbon chains, which combine different moieties. Preferably, the alkylene refers to linear unsubstituted C₁ to C₄ carbon atoms, selected from the group consisting of - CH₂-, -CH₂-CH₂-, -CH₂-CH₂-CH₂- and -CH₂-CH₂-CH₂-CH₂-.

Within the context of the presently claimed invention, the term arylalkyl, as used herein, refers to alkyl having 5 to 24 carbon atoms (as defined above), wherein one hydrogen atom of the alkyl radical is replaced by a aryl radical.

Within the context of the presently claimed invention, the term heteroaryl, as used herein, refers to C₅-C₁₀ heteroaromatic groups, for example pyrrole, pyrazole, imidazole, 2, 4, dime-thylpyrrole, 1-methylpyrrole, thiophene, furan, furfural, indole, cumarone, oxazole, thiazole, isoxazole, isothiazole, triazole, pyridine, α-picoline, pyridazine, pyrazine or pyrimidine.

Within the context of the presently claimed invention, the term alkinyl, as used herein, refers to a linear unsaturated aliphatic groups with 3 to 18 carbon atoms such as propinyl (-CH₂-C=CH), 2-butinyl, 3-butinyl, n-2-octinyl, or n-2-octadecinyl.

Examples for halogen substituted alkyl are dichloropropyl, monobromobutyl or trichlorohexyl. C₂-C₁₈ alkyl interrupted by at least one O atom is for example -CH₂-CH₂-O-CH₂-CH₃, -CH₂-CH₂-O-CH₃- or -CH₂-CH₂-O-CH₂-CH₂-CH₂-O-CH₂-CH₃-. It is preferably derived from polyethlene glycol. A general description is -((CH₂)ₐ-O)_{b}-H/CH₃, wherein a is a number from 1 to 6 and b is a number from 2 to 10.

In a more preferred embodiment, the polymer composition comprises
a) at least one polyacrylic block copolymer in the range from 10 to 90 wt% based on the total weight of the composition,
   wherein the at least one polyacrylic block copolymer is obtainable by reacting
   i) polymer (A) obtainable by controlled free radical polymerization of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid,
      in the presence of either a1 or a2,
      wherein
      a1 is at least one nitroxylether of formula (I)

         R¹R²NOX (I),
      wherein
      R¹ and R² are independently selected from substituted or unsubstituted, linear or branched C₅-C₁₈ alkyl, or R¹ and R² together with the nitrogen atom to which they are attached form an unsubstituted or substituted 5- to 10-membered aliphatic ring comprising 1 to 3 heteroatom(s) selected from nitrogen and oxygen, and
      X is selected from -CH₂-phenyl, - CH(CH₃)-phenyl, -C(CH₃)₂-phenyl, -(C₅-C₆ cycloalkyl)₂C-CN, -(CH₃)₂CCN, -CH₂CH=CH₂, -CH₃CH-CH=CH₂, -(C₁-C₄alkyl)CR³-C(O)-phenyl, -(C₁-C₄)alkyl-CR³-C(O)-(C₁-C₄)alkoxy, -(C₁-C₄)alkyl-CR³-C(O)-(C₁-C₄)alkyl, -(C₁-C₄)alkyl-CR³-C(O)-N-di(C₁-C₄)alkyl, -(C₁-C₄)alkyl-CR³-C(O)-NH(C₁-C₄)alkyl, and -(C₁-C₄)alkyl-CR³-C(O)-NH₂, wherein R³ is hydrogen or (C₁-C₄)alkyl;
      with
   ii) at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds; and
b) at least one aromatic based polyalkyleneoxide in the range from 10 to 90 wt% based on the total weight of the composition,
   wherein the at least one aromatic based polyalkyleneoxide is obtainable by reacting
   (i) at least one monoamine functionalized polyalkyleneoxide of formula (III)

      T-(O-P)ₙ-NH₂ (III)

      wherein P is a substituted or unsubstituted, linear or branched C₁-C₄ alkylene, or a mixture of C₁-C₄ alkylene, and
      T is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl and n is an integer in the range of 1 to 150;
      with
   (ii) at least one aromatic compound of the formula (IV) 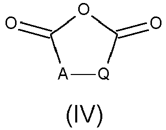 wherein
      - Q: is a chemical bond or a divalent moiety selected from -O-, -NH- and -S-,
      - A: is an unsubstituted or substituted aromatic group selected from the formula 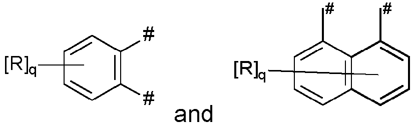
      wherein # indicates the point of attachment to the rest of the molecule, and
      - q: is 0, 1, 2, 3 or 4,
      - R: is independently selected from halogen, NO₂, OH, C₁-C₄-alkyl, C₁-C₄-alkoxy, CONH₂, NH-CHO, NH-C₁-C₄-alkyl, and NH-(C=O)-C₁-C₄-alkyl.

In a more preferred embodiment, the polymer composition comprises
a) at least one polyacrylic block copolymer in the range from 20 to 80 wt%, and
b) at least one aromatic based polyalkyleneoxide in the range from 20 to 80 wt%; both based on the total weight of the composition.

In an even more preferred embodiment, the polymer composition comprises
a) at least one polyacrylic block copolymer in the range from 35 to 80 wt%, and
b) at least one aromatic based polyalkyleneoxide in the range from 35 to 80 wt%, both based on the total weight of the composition.

In a most preferred embodiment, the polymer composition comprises
a) at least one polyacrylic block copolymer in the range from 40 to 60 wt%, and
b) at least one aromatic based polyalkyleneoxide in the range from 40 to 60 wt%, both based on the total weight of the composition.

### A) Polyacrylic block copolymer

### 1) Acrylic acid monomer

The first polymerization step is controlled free radical polymerization (CFRP) of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid.

In a more preferred embodiment, the at least one acrylate monomer is selected from C₁-C₆ alkyl esters of acrylic acid.

In a most preferred embodiment, the at least one acrylate monomer is selected from n-butyl acrylate and 2-ethyl hexyl arylate.

### 2) Ethylenically unsaturated monomer

In the second polymerization step, the polymer obtained in the first polymerization step is reacted with at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds.

In a preferred embodiment, the at least one ethylenically unsaturated monomer are selected from isoprene, 1,3-butadiene, α-C₅-C₁₈ alkene, 4-vinyl-pyridine or pyridinium-ion, 2-vinyl-pyridine or pyridinium-ion, vinyl-imidazole or imidazolinium-ion, dimethylacrylamide, 3-dimethylaminopropylmethacrylamide, styrene, α-methyl styrene, p-methyl styrene, p-tert-butyl-styrene and
a compound of formula:

   CH₂=C(Rₐ)-(C=Z)-R_{b},
wherein Rₐ is hydrogen or C₁-C₄ alkyl,
R_{b} is NH₂, O⁻(Me⁺), unsubstituted C₁-C₁₈ alkoxy, C₂-C₁₀₀ alkoxy interrupted by at least one N and/or O atom, or hydroxy-substituted C₁-C₁₈ alkoxy, unsubstituted C₁-C₁₈ alkylamino, di(C₁-C₁₈ alkyl)amino, hydroxy-substituted C₁-C₁₈ alkylamino or hydroxy-substituted di(C₁-C₁₈ alkyl)amino, -O-CH₂-CH₂-N(CH₃)₂ or -O-CH₂-CH₂-N⁺H(CH₃)₂ An-; An- is an anion of a monovalent organic or inorganic acid; Me is a monovalent metal atom or the ammonium ion. Z is oxygen or sulfur.

In a more preferred embodiment, Rₐ is hydrogen or methyl, R_{b} is selected from NH₂, glycidyl, unsubstituted or with hydroxy substituted C₁-C₄ alkoxy, unsubstituted C₁-C₄ alkylamino, di(C₁-C₄ alkyl)amino, hydroxy- substituted C₁-C₄ alkylamino and hydroxy-substituted di(C₁-C₄ alkyl)amino; and Z is oxygen.

Examples for R_{b} as C₂-C₁₀₀ alkoxy interrupted by at least one O atom are of formula, 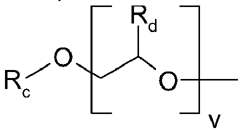 wherein R_{c} is C₁-C₂₅ alkyl, phenyl or phenyl substituted by C₁-C₁₈ alkyl, R_{d} is hydrogen or methyl and v is a number from 1 to 50.

These monomers are for example derived from non-ionic surfactants by acrylation of the corresponding alkoxylated alcohols or phenols. The repeating units may be derived from ethylene oxide, propylene oxide or mixtures of both.

Further examples of suitable acrylate or methacrylate monomers are given below. 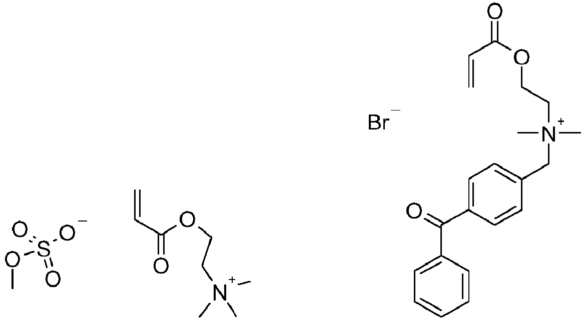 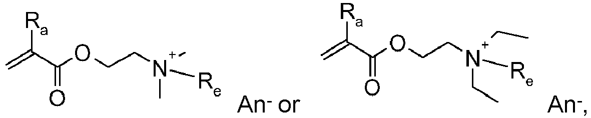 wherein An- and Rₐ have the meaning as defined above and Rₑ is methyl, benzyl or benzoylbenzyl. An⁻ is preferably Cl⁻, Br or -O₃S-O-CH₃.

Further acrylate monomers are

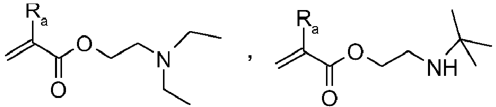

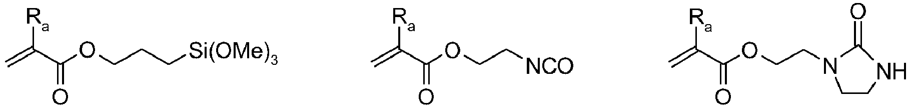

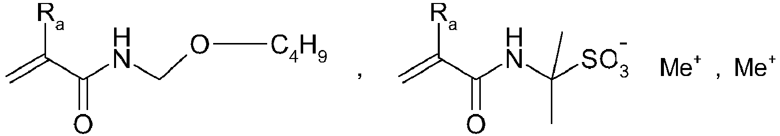

Me⁺ is an alkali metal cation or the ammonium cation. Useful are also silicone functional (meth)acrylates.

In an even more preferred embodiment, the at least one ethylenically unsaturated monomer is selected from 3-dimethylaminopropylmethacrylamide, 2-vinyl-pyridine, 4-vinyl-pyridine, dimethylaminoethyl methacrylate, hydroxyethylacrylate, hydroxyproylacrylate, n-butylacrylate, and styrene.

In a most preferred embodiment, the at least one ethylenically unsaturated monomer is selected from 2-vinyl-pyridine, 4-vinyl-pyridine, 3-diemthylaminopropylmathylacrylamide and dimethylaminoethyl methacrylate.

Examples for suitable ethylenically unsaturated monomer other than acrylates are

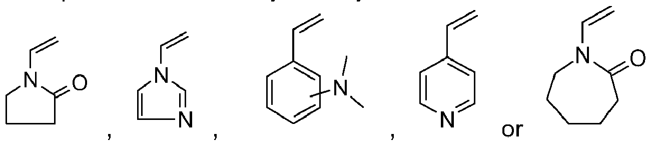

In a preferred embodiment, the ethylenically unsaturated monomer is selected from the group consisting of ethylene, propylene, n-butylene, i-butylene, styrene, substituted styrene, conjugated dienes, acrolein, vinyl acetate, vinylpyrrolidone, vinylimidazole, maleic anhydride, (alkyl)acrylic acid- anhydrides, (alkyl)acrylic acid salts, (alkyl)acrylic esters, (alkyl)acrylonitriles, (alkyl)acryl- amides, vinyl halides and vinylidene halides.

In a preferred embodiment, the ethylenically unsaturated monomer is selected from styrene, substituted styrene, methylacrylate, ethylacrylate, butylacrylate, isobutylacrylate, tert-butylacrylate, hydroxyethylacrylate, hydroxypropylacrylate, dimethylaminoethylacrylate, methyl(meth)acrylate, ethyl-(meth)acrylate, butyl(meth)acrylate, hydroxyethyl(meth)acrylate, hydroxypropyl(meth)acrylate, dimethylaminoethyl(meth)acrylate, acrylonitrile, methacrylonitrile, acrylamide, meth-acrylamide and dimethylaminopropyl-methacrylamide.

It is also possible to use mixtures of the aforementioned monomers, in particular styrene/ acrylonitrile, styrene/ butylacrylate, styrene/methylmethacrylate and styrene/butylmethacrylate.

All possible polymer chain structures are comprised: e.g. linear or branched. If the monomers are selected from chemically different monomers, all possible monomer sequence structures are comprised, e.g. random-, blocklike, multiblock-, tapered- or gradient arrangement of the different monomers.

In a preferred embodiment, the above described controlled free radical polymerization process is carried out twice to obtain a block copolymer.

In a preferred embodiment, the block copolymer is a gradient block copolymer.

Under gradient polymers or gradient arrangement there are understood block copolymers, which are prepared in such a way, that the intersection between the two blocks is not a sharp boundary, but represents a continuous transition from one type of monomer to another type of monomer, i.e. both monomers extending to both blocks. This type of polymers can be obtained when the polymerization process is carried out for example in one step using monomers of different copolymerization parameters or by a multistep procedure, in which the monomer composition is stepwise changed by addition of appropriate amounts of another type of monomer. Another preferred procedure for the synthesis of gradient polymers is by using continuous feed processes, in which for example the controlled polymerization is started with a first monomer and before complete conversion, a second monomer is continuously fed to the reaction mixture, thus realizing a continuous transition along the polymer chains. When controlled free radical polymerization is carried out twice and a block copolymer is obtained for example the monomer or monomer mixture of the first radical polymerization contains from 50 to 100% by weight based on total monomers of a C₁-C₄ alkyl or hydroxyalkyl ester of acrylic or methacrylic acid and the second radical polymerization contains a monomer or monomer mixture possessing the ethylenically unsaturated monomer.

### 3) Nitroxylether of formula (I) and stable free nitroxyl radical of formula (II)

In a preferred embodiment, the controlled free radical polymerization is carried out in the presence of a1.

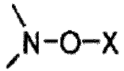

In a preferred embodiment, the controlled free radical polymerization is carried out in the presence of a2.

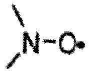

Suitable nitroxylethers and nitroxyl radicals are principally known from US-A-4 581 429 or EP-A-621 878.

Particularly useful are the open chain compounds described in WO 98/13392 (Akzo), WO 99/03894 (Ciba) and WO 00/07981 (Ciba), the piperidine derivatives described in WO 99/67298 (Ciba) and GB 2335190 (Ciba) or the heterocyclic compounds described in GB 2342649 (Ciba)and WO 96/24620 (Atochem).

Further suitable nitroxylethers and nitroxyl radicals are described in WO 02/4805 (Ciba) and in WO 02/100831 (Ciba).

Nitroxylethers and nitroxyl radicals with more than one nitroxyl group in the molecule are for example described in US 6,573,347(Ciba), WO 01/02345 (Ciba) and WO 03/004471 (Ciba).

In the context of the present invention the terms alkoxyamine and nitroxylether are used as equivalents.

Stable free radicals having a structural element N-O* are for example disclosed in EP-A-621 878 (Xerox).

Examples of such as are given in WO96/24620

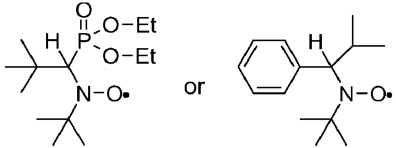

In a preferred embodiment, the structural element N-O-X or N-O* is part of a 5 or 6-membered heterocyclic ring, which optionally has an additional nitrogen or oxygen atom in the ring system.

In a more preferred embodiment, the structural element N-O-X or N-O* is part of a substituted piperidine, morpholine and piperazine derivatives.

In a preferred embodiment, the structural element N-O-X is a structural element of formula (la) 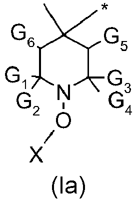 wherein
G₁, G₂, G₃, G₄ are independently C₁-C₆ alkyl or
G₁ and G₂ or G₃ and G₄, or G₁ and G₂ and G₃ and G₄ together form a C₅-C₁₂ cycloalkyl group;
G₅, G₆ independently are H, C₁-C₁₈ alkyl, phenyl, naphthyl or a group -COOC₁-C₁₈ alkyl;
X is selected from the group consisting of -CH₂-phenyl, CH(CH₃)-phenyl, C(CH₃)₂-phenyl, (C₅-C₆ cycloalkyl)₂CCN, (CH₃)₂CCN, -CH₂CH=CH₂, 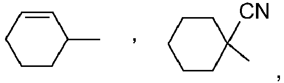 CH₃CH-CH=CH₂, (C₁-C₄ alkyl)CR₂₀-C(O)-phenyl, (C₁-C₄)alkyl-CR₂₀-C(O)-(C₁-C₄)alkoxy, (C₁-C₄)alkyl-CR₂₀-C(O)-(C₁-C₄)alkyl, (C₁-C₄)alkyl-CR₂₀-C(O)-N-di(C₁-C₄)alkyl, (C₁-C₄)alkyl-CR₂₀-C(O)-NH(C₁-C₄)alkyl, (C₁-C₄)alkyl-CR₂₀-C(O)-NH₂, wherein R₂₀ is hydrogen or (C₁-C₄)alkyl and * denotes a valence.

In a preferred embodiment, the structural element N-O* is a structural element of formula (lla) 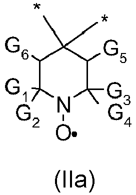 wherein
G₁, G₂, G₃, G₄ are independently C₁-C₆ alkyl or
G₁ and G₂ or G₃ and G₄, or G₁ and G₂ and G₃ and G₄ together form a C₅-C₁₂ cycloalkyl group;
G₅, G₆ independently are H, C₁-C₁₈ alkyl, phenyl, naphthyl or a group -COOC₁-C₁₈ alkyl;
* denotes a valence.

In a preferred embodiment, the structural element N-O-X is of formula A, B or O, 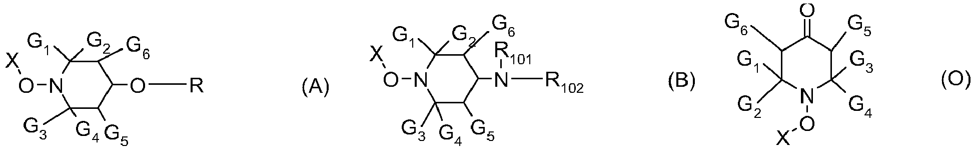 wherein
R is hydrogen, C₁-C₁₈ alkyl which is uninterrupted or interrupted by one or more oxygen atoms, cyanoethyl, benzoyl, glycidyl, a monovalent radical of an aliphatic carboxylic acid having 2 to 18 carbon atoms, of a cycloaliphatic carboxylic acid having 7 to 15 carbon atoms, or an α,β-unsaturated carboxylic acid having 3 to 5 carbon atoms or of an aromatic carboxylic acid having 7 to 15 carbon atoms;
R₁₀₁ is C₁-C₁₂ alkyl, C₅-C₇ cycloalkyl, C₇-C₈ aralkyl, C₂-C₁₈ alkanoyl, C₃-C₅ alkenoyl or benzoyl;
R₁₀₂ is C₁-C₁₈ alkyl, C₅-C₇ cycloalkyl, C₂-C₈ alkenyl unsubstituted or substituted by a cyano, carbonyl or carbamide group, or is glycidyl, a group of the formula -CH₂CH(OH)-Z or of the formula -CO-Z or -CONH-Z, wherein Z is hydrogen, methyl or phenyl;
G₆ is hydrogen and
G₅ is hydrogen or C₁-C₄alkyl,
G₁ and G₃ are methyl and G₂ and G₄ are ethyl or propyl or G₁ and G₂ are methyl and G₃ and
G₄ are ethyl or propyl; and
X is selected from the group consisting of -CH₂-phenyl, CH(CH₃)-phenyl, C(CH₃)₂-phenyl, (C₅-C₆ cycloalkyl)₂CCN, (CH₃)₂CCN, 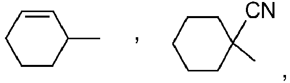 -CH₂CH=CH₂, CH₃CH-CH=CH₂, (C₁-C₄ alkyl)CR₂₀-C(O)-phenyl, (C₁-C₄)alkyl-CR₂₀-C(O)-( C₁-C₄)alkoxy, (C₁-C₄)alkyl-CR₂₀-C(O)-(C₁-C₄)alkyl, (C₁-C₄)alkyl-CR₂₀-C(O)-N-di(C₁-C₄)alkyl, (C₁-C₄)alkyl-CR₂₀-C(O)-NH(C₁-C₄)alkyl, (C₁-C₄)alkyl-CR₂₀-C(O)-NH₂, wherein R₂₀ is hydrogen or (C₁-C₄)alkyl.

In a preferred embodiment, the structural element N-O* is of formula A', B' or O', 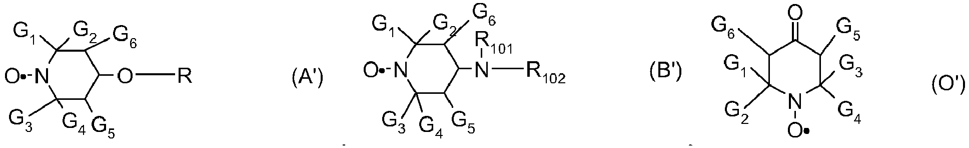 wherein
R is hydrogen, C₁-C₁₈ alkyl which is uninterrupted or interrupted by one or more oxygen atoms, cyanoethyl, benzoyl, glycidyl, a monovalent radical of an aliphatic carboxylic acid having 2 to 18 carbon atoms, of a cycloaliphatic carboxylic acid having 7 to 15 carbon atoms, or an α,β-unsaturated carboxylic acid having 3 to 5 carbon atoms or of an aromatic carboxylic acid having 7 to 15 carbon atoms;
R₁₀₁ is C₁-C₁₂ alkyl, C₅-C₇ cycloalkyl, C₇-C₈ aralkyl, C₂-C₁₈ alkanoyl, C₃-C₅ alkenoyl or benzoyl; R₁₀₂ is C₁-C₁₈ alkyl, C₅-C₇ cycloalkyl, C₂-C₈ alkenyl unsubstituted or substituted by a cyano, carbonyl or carbamide group, or is glycidyl, a group of the formula -CH₂CH(OH)-Z or of the formula -CO-Z or -CONH-Z, wherein Z is hydrogen, methyl or phenyl;
G₆ is hydrogen and
G₅ is hydrogen or C₁-C₄ alkyl,
G₁ and G₃ are methyl and G₂ and G₄ are ethyl or propyl or G₁ and G₂ are methyl and G₃ and
G₄ are ethyl or propyl.

The above compounds and their preparation are described in GB2335190 and GB2361235.

In a preferred embodiment, the structural element N-O-X are of formula (Ic), (Id), (le), (If), (Ig) or (Ih) 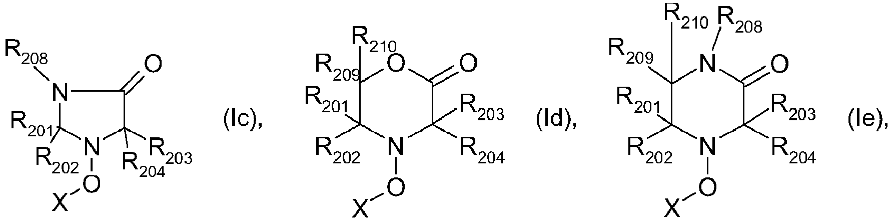 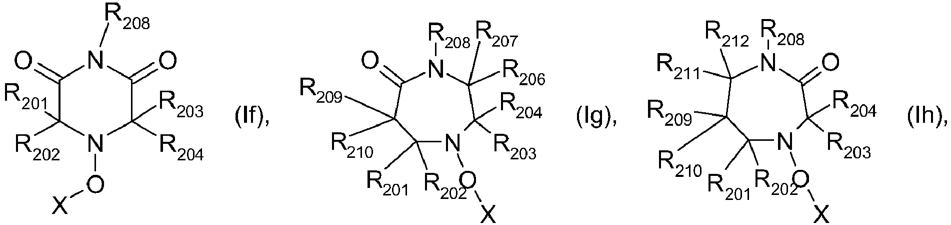 wherein
R₂₀₁, R₂₀₂, R₂₀₃ and R₂₀₄ independently of each other are C₁-C₁₈ alkyl, C₃-C₁₈ alkenyl, C₃-C₁₈ alkinyl, C₁-C₁₈ alkyl , C₃-C₁₈ alkenyl, C₃-C₁₈ alkinyl, which are substituted by OH, halogen or a group -O-C(O)-R₂₀₅, C₂-C₁₈ alkyl which is interrupted by at least one O atom and/or NR₂₀₅ group, C₃-C₁₂ cycloalkyl or C₆-C₁₀ aryl or R₂₀₁ and R₂₀₂ and/or R₂₀₃ and R₂₀₄ together with the linking carbon atom form a C₃-C₁₂ cycloalkyl radical;
R₂₀₅, R₂₀₆ and R₂₀₇ independently are hydrogen, C₁-C₁₈ alkyl or C₆-C₁₀ aryl;
R₂₀₈ is hydrogen, OH, C₁-C₁₈ alkyl, C₃-C₁₈ alkenyl, C₃-C₁₈ alkinyl, C₁-C₁₈ alkyl, C₃-C₁₈ alkenyl, C₃-C₁₈ alkinyl, which are substituted by one or more OH, halogen or a group -O-C(O)-R₂₀₅, C₂-C₁₀ alkyl which is interrupted by at least one O atom and/or NR₂₀₅ group, C₃-C₁₂ cycloalkyl or C₆-C₁₀ aryl, C₇-C₉ phenylalkyl, C₅-C₁₀ heteroaryl, -C(O)-C₁-C₁₈ alkyl, -O-C₁-C₁₈ alkyl or - COOC₁ -C₁₈ alkyl;
R₂₀₉, R₂₁₀, R₂₁₁ and R₂₁₂ are independently hydrogen, phenyl or C₁-C₁₈ alkyl; and
X is selected from the group consisting of -CH₂-phenyl, CH(CH₃)-phenyl, C(CH₃)₂-phenyl, (C₅-C₆ cycloalkyl)₂CCN, (CH₃)₂CCN, 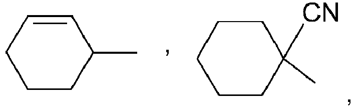 -CH₂CH=CH₂, CH₃CH-CH=CH₂, (C₁-C₄ alkyl)CR₂₀-C(O)-phenyl, (C₁-C₄)alkyl-CR₂₀-C(O)-(C₁-C₄)alkoxy, (C₁-C₄)alkyl-CR₂₀-C(O)-(C₁-C₄)alkyl, (C₁-C₄)alkyl-CR₂₀-C(O)-N-di(C₁-C₄)alkyl, (C₁-C₄)alkyl-CR₂₀-C(O)-NH(C₁-C₄)alkyl, (C₁-C₄)alkyl-CR₂₀-C(O)-NH₂, wherein R₂₀ is hydrogen or (C₁-C₄)alkyl.

More preferably in formula (Ic), (Id), (le), (If), (Ig) and (Ih) at least two of R₂₀₁, R₂₀₂, R₂₀₃ and
R₂₀₄ are ethyl, propyl or butyl and the remaining are methyl; or
R₂₀₁ and R₂₀₂ or R₂₀₃ and R₂₀₄ together with the linking carbon atom form a C₅-C₆ cycloalkyl radical and one of the remaining substituents is ethyl, propyl or butyl.

Most preferably X is CH(CH₃)-phenyl.

The above compounds and their preparation are described in GB 2342649.

In a preferred embodiment, the structural elements N-O-X and N-O* are 4-imino compounds of formula (III) or (IV) 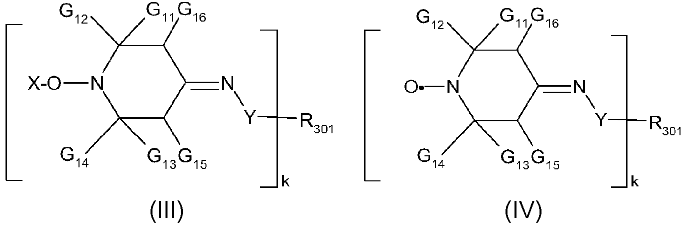 wherein
G₁₁, G₁₂, G₁₃ and G₁₄ are independently C₁-C₄ alkyl or
G₁₁ and G₁₂ together and G₁₃ and G₁₄ together, or G₁₁ and G₁₂ together or G₁₃ and G₁₄ together are pentamethylene;
G₁₅ and G₁₆ are each independently of the other hydrogen or C₁-C₄ alkyl;
X is as defined above;
k is 1 , 2, 3, or 4
Y is O or NR₃₀₂ or when k is 1 and R₃₀₁ represents alkyl or aryl Y is additionally a direct bond;
R₃₀₂ is H, C₁-C₁₈ alkyl or phenyl;
if k is 1
R₃₀₁ is H, straight or branched C₁-C₁₈ alkyl, C₃-C₁₈ alkenyl or C₃-C₁₈ alkinyl, which may be unsubstituted or substituted, by one or more OH, C₁-C₈ alkoxy, carboxy, C₁-C₈ alkoxycarbonyl; cycloalkyl or C₅-C₁₂ cycloalkenyl;
phenyl, C₇-C₉ phenylalkyl or naphthyl which may be unsubstituted or substituted by one or more C₁-C₈ alkyl, halogen, OH, C₁-C₈ alkoxy, carboxy, C₁-C₈ alkoxycarbonyl;
-C(O)-C₁-C₃₆alkyl, or an acyl moiety of a α,β-unsaturated carboxylic acid having 3 to 5 carbon atoms or of an aromatic carboxylic acid having 7 to 15 carbon atoms;
-SO₃Q⁺, -PO(O-Q⁺)₂, -P(O)(OC₁-C₈alkyl₂)₂, -P(O)(OH₂)₂, -SO₂-OH, -SO₂-C₁-C₃ alkyl, -CO-NH- C₁-C₃ alkyl, -CONH₂, COO- C₁-C₈ alkyl₂, COOH or Si(Me)₃, wherein Q⁺ is H⁺, ammonium or an alkali metal cation;
if k is 2
R₃₀₁ is C₁-C₁₃ alkylene, C₃-C₁₈ alkenylene or C₃-C₁₈ alkinylene, which may be unsubstituted or substituted, by one or more OH, C₁-C₈ alkoxy, carboxy, C₁-C₈ alkoxycarbonyl; or xylylene;
or R₃₀₁ is a bisacyl radical of an aliphatic dicarboxylic acid having 2 to 36 carbon atoms, or a cycloaliphatic or aromatic dicarboxylic acid having 8-14 carbon atoms;
if k is 3,
R₃₀₁ is a trivalent radical of an aliphatic, cycloaliphatic or aromatic tricarboxylic acid; and
if k is 4,
R₃₀₁ is a tetravalent radical of an aliphatic, cycloaliphatic or aromatic tetracarboxylic acid.

Preferably G₁₆ is hydrogen and G₁₅ is hydrogen or C₁-C₄ alkyl, in particular methyl, and G₁₁ and G₁₃ are methyl and G₁₂ and G₁₄ are ethyl or propyl or G₁₁ and G₁₂ are methyl and G₁₃ and G₁₄ are ethyl or propyl.

The 4 imino compounds of formula (III) or (IV) can be prepared for example according to E.G. Rozantsev, A.V. Chudinov, V.D. Sholle. : Izv. Akad. Nauk. SSSR, Ser. Khim. (9), 2114(1980), starting from the corresponding 4-oxonitroxide in a condensation reaction with hydroxylamine and subsequent reaction of the OH group. The compounds are described WO 02/100831 (Ciba).

In a preferred embodiment, the controlled free radical polymerization process is carried out in the presence of a1). The nitroxylether of formula (I) according to the structures outlined above splits between the O-X bond. The regulating fragment in formula (I) corresponds to the O-N fragment and the initiating fragment (In) corresponds to the C centred radical of the group X.

In a more preferred embodiment, suitable nitroxylethers and nitroxyl radicals are those of formulae:

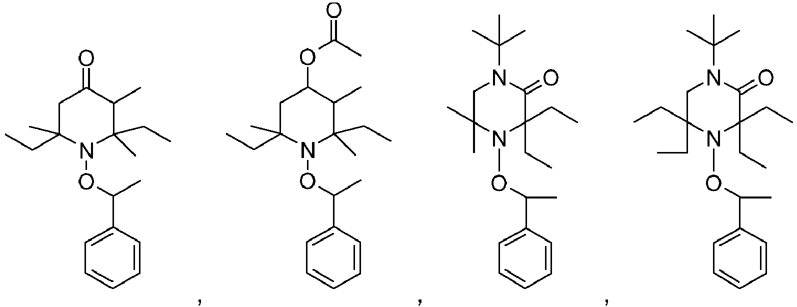

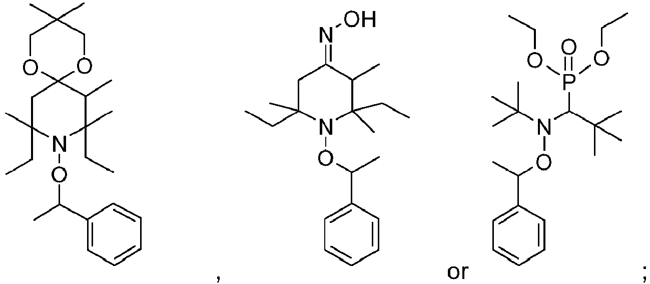

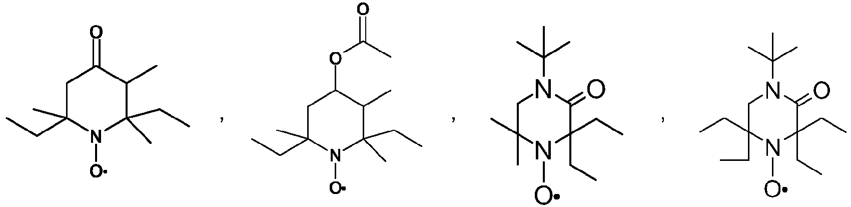

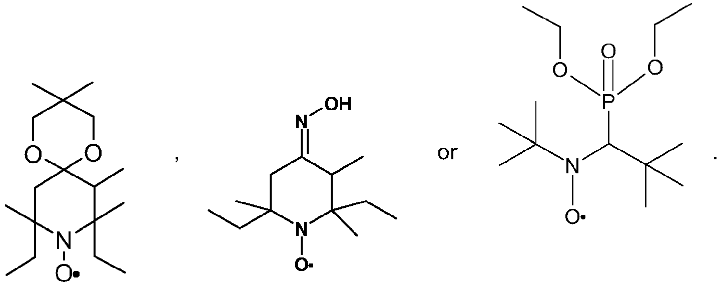

In a particularly preferred embodiment, the at least one nitroxylether is a compound of formula (Ia).

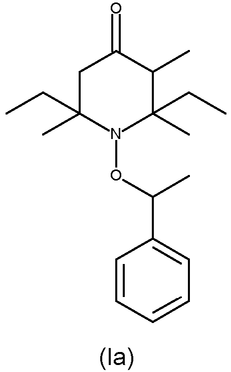

In a preferred embodiment, the initiator compound (a1 or a2) is present in an amount of from 0.01 mol-% to 30 mol-%, more preferably in an amount of from 0.1 mol-% to 20 mol-% and most preferred in an amount of from 0.1 mol-% to 10 mol-% based on the amount of the monomer or monomer mixture.

When monomer mixtures are used, mol% is calculated on the average molecular weight of the mixture.

When the controlled free radical polymerization is carried out in the presence of a2, the free radical initiator is preferably an azo compound, a peroxide, perester or a hydroperoxide.

In a more preferred embodiment, the free radical initiator are 2,2'-azobisisobutyronitrile, 2,2'-azobis(2-methyl-butyronitrile), 2,2'-azobis(2,4-dimethylvaleronitrile), 2,2'-azobis(4-methoxy-2,4-dimethylvaleronitrile), 1,1'-azobis(1-cyclohexanecarbonitrile), 2,2'-azobis(isobutyramide) dihydrate, 2-phenylazo-2,4-dimethyl-4-methoxyvaleronitrile, dimethyl-2,2'-azobisisobutyrate, 2-(carbamoylazo)isobutyronitrile, 2,2'-azobis(2,4,4-trimethylpentane), 2,2'-azobis(2-methylpropane), 2,2'-azobis(N,N'-dimethyleneisobutyramidine), free base or hydrochloride, 2,2'-azobis(2- amidinopropane), free base or hydrochloride, 2,2'-azobis{2-methyl-N-[1,1-bis(hydroxy-methyl)ethyl]propionamide} or 2,2'-azobis{2-methyl-N-[1,1-bis(hydroxymethyl)-2-hydroxy- ethyl]propionamide; acetyl cyclohexane sulphonyl peroxide, diisopropyl peroxy dicarbonate, t-amyl perneodecanoate, t-butyl perneodecanoate, t-butyl perpivalate, t-amylperpivalate, bis(2,4-dichlorobenzoyl)peroxide, diisononanoyl peroxide, didecanoyl peroxide, dioctanoyl peroxide, dilauroyl peroxide, bis(2-methylbenzoyl) peroxide, disuccinic acid peroxide, diacetyl peroxide, dibenzoyl peroxide, t-butyl per 2-ethylhexanoate, bis-(4-chlorobenzoyl)-peroxide, t-butyl perisobutyrate, t-butyl permaleinate, 1 ,1-bis(t-butylperoxy)3,5,5-trimethyl-cyclohexane, 1 ,1-bis(t-butylperoxy)cyclohexane, t-butyl peroxy isopropyl carbonate, t-butyl perisononaoate, 2,5-dimethylhexane 2,5-dibenzoate, t-butyl peracetate, t-amyl perbenzoate, t-butyl perbenzoate, 2,2-bis(t-butylperoxy) butane, 2,2 bis(t-butylperoxy)propane, dicumyl peroxide, 2,5-dimethylhexane-2,5-di-t-butylperoxide, 3-t-butyl peroxy 3-phenylphthalide, di-t-amyl peroxide, α,α'-bis(t-butylperoxyisopropyl)benzene, 3,5-bis(t-butylperoxy)3,5-dimethyl-1,2-dioxolane, di-t-butyl peroxide, 2,5-dimethylhexyne-2,5-dit-butylperoxide, 3,3,6,6,9,9-hexamethyl 1,2,4,5-tetraoxacyclononane, p-menthane hydroperoxide, pinane hydroperoxide, diisopropylbenzene mono-α-hydroperoxide, cumene hydroperoxide or t-butyl hydroperoxide.

In a preferred embodiment, the free radical initiator is present in an amount of from 0.01 mol-% to 30 mol-%, more preferably in an amount of from 0.1 mol-% to 20 mol-% and most preferably in an amount of from 0.5 mol-% to 10 mol-% based on the amount of the monomer or monomer mixture.

In a preferred embodiment, the molar ratio of the free radical initiator to the nitroxyl radical is in the range from 1 :10 to 10:1, more preferably from 1 :5 to 5:1, and most preferably from 1:2 to 2:1.

In a preferred embodiment, the polymer or copolymer prepared according by the controlled free radical polymerization has a molecular weight (M_{w}) in the range from 2,000 g/mol to 50,000 g/mol, more preferably from 5,000 g/mol to 30,000 g/mol, and most preferably from 8,000 g/mol to 20,000 g/mol.

In a preferred embodiment, the polymer or copolymer prepared according by the controlled free radical polymerization has a polydispersity index of 1.0 to 2.2, more preferably from 1.1 to 1.9, and most preferably from 1.1 to 1.5.

### Transesterification

The polyacrylic block copolymer is optionally subjected to functionalization by transesterification with at least one alcohol. In transesterification, the alcohol radical in an ester group of the polymer or copolymer is replaced by another alcohol radical.

In a preferred embodiment, the at least one polyacrylic block copolymer is subjected to functionalization with at least one alcohol selected from W1 and W2,
wherein,
W1 is R⁴-OH,
wherein R⁴ is a substituted or unsubstituted, linear or branched C₈-C₃₆ alkyl;
W2 is at least one polyether alcohol of formula

   G-(O-Q)ₙ-OH
wherein G is a substituted or unsubstituted, linear or branched C₁-C₄ alkylene, and
Q is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl, and n is an integer in the range of 1 to 150.

Typically, the transesterification reaction is carried out at elevated temperatures, typically 70 - 200°C, by reacting the polymer obtained from CFRP with the corresponding alcohol in the presence of well-known catalysts, such as tetra-isopropyltitanate, tetra-butyltitanate, alkali- or earth alkali alcoholates like NaOMe or LiOMe. Typically, the low boiling product alcohol is removed from the transterification reaction mixture by distillation. If required, catalyst residues may be removed by adsorption or extraction or otherwise processed or inactivated by known methods, like hydrolysis with water or acids.

The choice of the replacing alcohol is important as the replacing alcohol controls the properties of the resulting copolymer.

By using a polar replacing alcohol such as alcohols having e.g. the following formula R-[O-CH₂-CH₂-]ₙ-OH, e.g. methoxypolyethylene glycol (MPEG-OH), a water-soluble resulting polymer can be obtained. The solubility depends on the amount of transesterified monomer units. At least 40 % of the units should be transesterified to obtain the desired effect.

If the solubility in organic solvents is required, nonpolar alcohols like higher molecular weight branched aliphatic alcohols can be beneficial.

If polymers with low surface tension are desired, alcohols containing siloxane groups are preferred, e.g. with the following formula 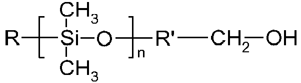 or partly or fully fluorinated primary alcohols can be used instead or in addition.

If a solid copolymer is required, solid alcohols or polar alcohols which are able to raise the glass transition temperature (T_{g}) or impart side chain crystallinity should be used. An example is behenyl alcohol.

The replacing alcohol radical is typically an aliphatic C₆-C₃₆ alcohol or a precursor of an alcohol, having at least one -OH group. The alcohol may also be interrupted by 1 to 20 O or N atoms or substituted by halogen, perfluoralkyl, NH₂, NH(C₁-C₁₈ alkyl), N(C₁-C₁₈ alkyl)₂, COO(C₁-C₁₈ alkyl), CON(C₁-C₁₈ alkyl)₂, CONH(C₁-C₁₈ alkyl), CONH₂, COOH, COO-, O(C₁-C₁₈ alkyl) or with a Si, P or S containing group, for example alkylhydroxysilicones. The alcohol may also contain heterocyclic ring structures, such as 1-(2-hydroxyethyl)-2-pyrrolidinone, 1-(2-hydroxyethyl)-2-imidazolidinone, 2-(2-hydroxyethyl)pyridine, N-2-hydroxyethyl)phtalimide, 4-(2-hydroxyethyl)morpholine, 1-(2-hydroxyethyl)piperazine, N-hydroxymethylphthalimide, 3-hydroxymethylpyridine or (4-pyridyl)-1-propanol.

The alcohols, which are interrupted by O or N atoms are not limited to 36 C atoms. These can be oligomeric or polymeric alcohols also. Examples of alcohols interrupted by O atoms are methoxypolyethyleneglycols or adducts of ethyleneoxide and/or propylene- oxide (EO/PO). Such EO/PO-adducts can be random or block type structures.

In a more preferred embodiment, the alcohol is an unsubstituted linear or branched C₈-C₃₆ alkyl monoalcohol or a monoalcohol derived from ethylenoxide, propylenoxide or mixtures thereof with up to 100 C atoms.

In an even more preferred embodiment, the alcohol is methoxypolyethyleneglycol (MPEG-OH).

In an embodiment, the at least one polyether alcohol is methoxypolyethyleneglycol with the molecular weight (M_{w}) of 200-1000 g/mol.

It is also possible to use fatty acid alcohol ethoxylates, alkylphenolethoxylates, alkoxylates of all kinds of monofuntional alcohols or phenols or secondary amines. Preferably the alkoxylate is an ethoxylate of a primary alcohol or alkylphenol of structure (A):

R-[O-CH₂-CH₂-]ₙ-OH (A)

wherein R is saturated or unsaturated, linear or branched chain alkyl with 1 -22 carbon atoms, or alkylaryl or dialkylaryl with up to 24 carbon atoms and n is 1 to 50.

Referring to another embodiment the alcohol is an unsubstituted linear or branched C₈-C₃₆ alkyl mono alcohol or mixtures thereof. An example is a mixture of iso C₁₂-C₁₅ alcohol. Nonpolar polymers or copolymers are obtained.

In another embodiment, the macroalcohol is a primary OH-functional silicone oligomer. Preferred are polydimethylsilicone oligomers of structure (B): 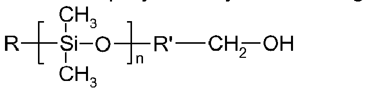 wherein
R is C₁-C₁₈ alkyl, phenyl or C₇-C₁₅ aralkyl; n is 1 to 50; and R' is a linking group with 1 to 20 carbon atoms. Typical linking groups are C₁-C₁₈ alkylene, phenylene or C₁-C₁₈ alkylene interrupted by 1 to 6 oxygen atoms.

In another embodiment the alcohol is a partly or fully fluorinated primary alcohols. Examples of commercial fluorinated alcohol mixtures are: Zonyl BA^{®}, Zonyl BA-L^{®}, Zonyl BA-LD^{®}, Zonyl BA-N^{®} from Du Pont.

Precursors of alcohols are for example macroalcohols, such as poly-ε-caprolactone oligomers or ε-caprolactone adducts and similar lactone adducts (e.g. based on valerolactone) or mixed adducts of ε-caprolactone and valerolactone. Typical lactone adducts are adducts of ε-caprolactone to long chain fatty alcohols of structure:

R-[O-CO-CH₂-CH₂-CH₂-CH₂-CH₂-]ₙ-OH

wherein R is saturated or unsaturated, linear or branched chain alkyl with 8 -22 carbon atoms or alkylaryl or dialkylaryl with up to 24 carbon atoms and n is 1 to 50. It is also possible to use macroalcohols based on polyolefins, which have typically molecular weights (M_{w}) up to 5000, preferably up to 2000.

Yet another embodiment are unsaturated alcohols containing carbon-carbon double bonds or carbon triple bonds. An example is oleyl alcohol. Regarding triple bond preferred are primary alkinols like propargyl alcohol and higher homologues like alkylsubstituted propargylal-cohol.

Preferably the alcohol is a monoalcohol and is a primary or secondary alcohol. Most preferred are primary alcohols or alcohol mixtures like Lial 125.

Preferably the alcohol or alcohol mixture is non-volatile and has a boiling point or range of at least 100°C, more preferably of at least 200°C.

### B) Aromatic based polyalkyleneoxide

The aromatic based polyalkyleneoxide bear at least one, e.g. on an average 1 to 250, in particular 2 to 150 and especially 5 to 100 aromatic moieties P.1 per polymer molecule. In this context, the term "on average" is understood as the number average. Each of the moieties P.1 is bound to a nitrogen atom of the polyalkylene imine backbone via a carboxamide or carboximide group.

The aromatic moiety P.1 comprises either an optionally substituted aryl, which is bound to a nitrogen atom of the polyethylene imine radical via a carbonyl group, thereby forming a carboxamide group, or an optionally substituted arylene radical which is bound to a nitrogen atom of the polyethylene imine radical via two carbonyl groups, thereby forming a carboximide group. The aryl or arylene moieties of P.1 are unsubstituted or substituted, e.g. by 1, 2, 3, 4 or 5 radicals, which are preferably selected from halogen, OH, C₁-C₄-alkyl, C₁-C₄-alkoxy, COOH, CONH₂, NH₂, NO₂, NH-CHO, NH-C₁-C₄-alkyl, and NH-(C=O)-C₁-C₄-alkyl.

Within the aromatic based polyalkyleneoxide, the radicals P.1 may be identical or different. Preferably, they are identical.

The moieties P.1 will generally contribute by an amount of 1 to 25% by weight, in particular from 1.5 to 15% by weight or from 2 to 10% by weight to the total weight of the polymer. The relative amount of the moieties P.1 to the polyalkylene imine may be from 10 to 200% by weight, in particular from 20 to 150% by weight.

In a preferred embodiment, the moiety P.1 is selected from the moieties of the formula (P.1') and (P.1") 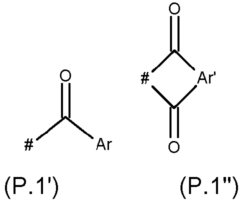 where
# indicates the point of attachment to a nitrogen atom of the polyalkylene imine backbone, Ar is phenyl or naphthyl, wherein phenyl and naphthyl, each independently are unsubstituted or carry 1, 2, 3, 4 or 5 radicals R, which are selected from halogen, OH, C₁-C₄-alkyl, C₁-C₄-alkoxy, COOH, CONH₂, NH₂, NO₂, NH-CHO, NH-C₁-C₄-alkyl, and NH-(C=O)-C₁-C₄-alkyl, Ar' is 1,2-phenylene, 1,2-, 2,3-, or 1,8-naphthylene, wherein phenylene and naphthylene, each independently are unsubstituted or carry 1, 2, 3, 4 or 5 radicals R, which are selected from halogen, OH, C₁-C₄-alkyl, C₁-C₄-alkoxy, COOH, CONH₂, NO₂, NH₂, NH-CHO, NH-C₁-C₄-alkyl, and NH-(C=O)-C₁-C₄-alkyl.

In this context, Ar and Ar' preferably have the following meanings:
Ar is phenyl or 1-naphthyl, wherein phenyl and naphthyl, each independently are unsubstituted or carry 1, 2 or 3 radicals R, in particular 1 or 2 radicals R, where R are identical or different and independently of each other are selected from halogen, OH, C₁-C₄-alkyl, C₁-C₄-alkoxy, COOH, CONH₂, NH₂, NO₂, NH-CHO, NH-C₁-C₄-alkyl, and NH-(C=O)-C₁-C₄-alkyl,
Ar' is 1,2-phenylene or 1,8-naphthylene, wherein phenylene and naphthylene each independently are unsubstituted or carry 1, 2 or 3 radicals R, in particular 1 radical R, where R are identical or different and independently of each other are selected from halogen, OH, C₁-C₄-alkyl, C₁-C₄-alkoxy, COOH, CONH₂, NH₂, NO₂, NH-CHO, NH-C₁-C₄-alkyl, and NH-(C=O)-C₁-C₄-alkyl.

In the context of formulae P.1', P.1", the substituents R on phenylene or naphthylene, if present, are in particular selected from the group consisting of Cl⁻, NH₂, NO₂, COOH, NH-CHO, NH-CH₃, and NH-(C=O)-CH₃.

In particular, the moiety P.1 is selected from the group consisting of radicals of the formulae (P.1a), (P.1b), (P.1c), (P.1d), and (P.1e), 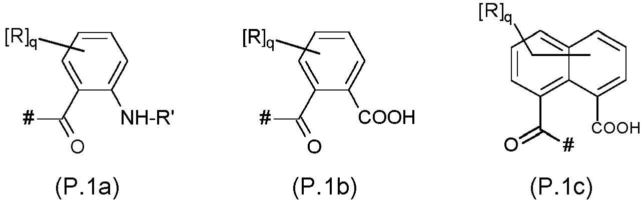 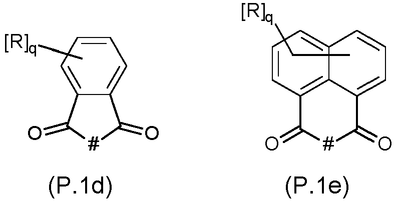 wherein
# indicates the point of attachment to a nitrogen atom of the polyalkylene imine backbone, q is 0, 1, 2, 3 or 4, in particular 0 or 1,
R' is hydrogen, C₁-C₄-alkyl, -CHO, or -(C=O)-C₁-C₄-alkyl, in particular hydrogen, methyl CHO or -(C=O)-CH₃ and especially methyl;
R is independently or identical selected from the group consisting of halogen, OH, NO₂, C₁-C₄-alkyl, C₁-C₄-alkoxy, CONH₂, NH-CHO, NH-C₁-C₄-alkyl, and NH-(C=O)-C₁-C₄-alkyl.

In the context of formulae P.1a, P.1b, P.1c, P.1d and P.1e, the radical R, if present, is in particular selected from the group consisting of Cl, NH₂, NO₂, NH-CHO, NH-CH₃, and NH-(C=O)-CH₃.

Examples of moieties P.1 include 2-aminophenylcarbonyl (P.1a with q = 0), 2,5-diamino-phenylcarbonyl (P.1a with q = 1, R = 5-NH₂), 2-amino-5-bromophenylcarbonyl (P.1a with q = 1, R = 5-Br), 2-carboxyphenylcarbonyl (P.1b with q = 0), 2,4-dicarboxyphenylcarbonyl (P.1b with q = 1, R = 4-COOH), 8-carboxynaphthyl-1-carbonyl (P.1c with q = 0), 3-bromo-8-carboxynaphthyl-1-carbonyl (P.1c with q = 1, R = 3-bromo), 6-bromo-8-carboxynaphthyl-1-carbonyl (P.1c with q = 1, R = 6-bromo), 3-nitro-8-carboxynaphthyl-1-carbonyl (P.1c with q = 1, R = 3-NO₂), 4-nitro-8-carboxynaphthyl-1-carbonyl (P.1c with q = 1, R = 4-NO₂), 5-nitro-8-carboxynaphthyl-1-carbonyl (P.1c with q = 1, R = 5-NO₂), 6-nitro-8-carboxynaphthyl-1-carbonyl (P.1c with q = 1, R = 6-NO₂), 1,2-phenylendicarbonyl (radical P.1d with q = 0), 4-carboxy-1,2-phenylendicarbonyl (radical P.1d with q = 1, R = 4-COOH), 1,8-nahpthy-lendicarbonyl (radical P.1e with q = 0), 3-bromo-1,8-nahpthylendicarbonyl (radical P.1e with q = 1, R = 3-Br), 3-nitro-1,8-nahpthylendicarbonyl (radical P.1e with q = 1, R = 3-NO₂), 4-nitro-1,8-nahpthylendicarbonyl (radical P.1e with q = 1, R = 4-NO₂).

The polymers of the invention bear at least one, e.g. on average 1 to 400, in particular 5 to 250 and especially 10 to 150 aliphatic polyester moieties P.2 per polymer molecule. In this context, the term "on average" is understood as the number average. Each of the moieties P.2 is bound to a nitrogen atom of the polyalkylene imine backbone via a carboxamide group. The term "aliphatic" means that the polyester groups do not contain aromatic rings. In particular, the polyester radicals bear repeating units having a C₂-C₈-alkylene moiety, which is unsubstituted or carries 1, 2, 3, or 4 C₁-C₄-alkyl radicals. Within the polymers of the invention, the moieties P.2 may be identical or different. Preferably, they are identical.

The moieties P.2 will generally contribute by an amount of 50 to 98% by weight, in particular from 70 to 97% by weight or from 80 to 96% by weight to the total weight of the polymer. The weight ratio of the moieties P.2 to the polyalkylene imine is generally in the range from 1:1 to 98:1, in particular from 2:1 to 97:1 or from 3:1 to 50:1.

Preferably, the moiety P.2 is 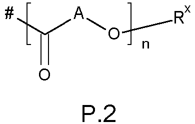 wherein
# indicates the point of attachment to a nitrogen atom of the polyalkylene imine backbone,
n is a number in the range of 2 to 100, in particular in the range of 3 to 50, especially in the range of 4 to 25;
A is independently from each other linear C₂-C₈-alkylene, in particular linear C₃-C₆-alkylene, where alkylene is unsubstituted or carries 1, 2, 3, or 4 C₁-C₄-alkyl radicals, and
R^{x} is hydrogen, C₁-C₂₀-alkyl, C₂-C₂₀-alkenyl, C(=O)-C₂-C₂₀-alkenyl or C(=O)-C₁-C₂₀-alkyl, wherein C₁-C₂₀-alkyl and C₂-C₂₀-alkenyl in the last four radicals are unsubstituted or carry 1 or 2 OH groups, wherein C₂-C₂₀-alkenyl has 1, 2, 3 or 4 olefinic C=C-double bonds, and wherein 1, 2, 3, or 4 non-adjacent CH₂ groups of C₁-C₂₀-alkyl may be replaced by O.

The variables A and R^{x} in the at least one moiety (P.2) have in particular the following meanings:
A is linear C₃-C₆-alkylene, more particularly 1,4-butandiyl or 1,5-pentandiyl or a combination thereof, and especially a combination of 1,4-butandiyl and 1,5-pentandiyl having a molar ratio of 1,4-butandiyl and 1,5-pentandiyl in the range of 1:20 to 10:1;
R^{x} is hydrogen, C(=O)-C₆-C₂₀-alky or C(=O)-C₆-C₂₀-alkenyl, wherein C₆-C₂₀-alkyl and C₆-C₂₀-alkenyl are unsubstituted or carry 1 or 2 OH groups and where R^{x} is especially C(=O)-C₁₀-C₂₀-alky or C(=O)-C₁₀-C₂₀-alkenyl, wherein C₁₀-C₂₀-alkyl and C₁₀-C₂₀-alkenyl are unsubstituted or carry 1 or 2 OH groups.

The polymers of the invention have a polyalkylenimine backbone, to which the at least one moiety P.1 and the at least one moiety P.2 are attached.

The polyalkylene imine may be linear or branched. The polyalkylene imine is in particular a linear or branched poly(C₂-C₄-alkyleneimine), more particularly a linear or branched polypropylene imine, a linear or branched poly(ethylene imine-co-propylene imine) or a linear or branched polyethylene imine or a mixture thereof. Especially, the polyalkylene imine, which forms the backbone, is a linear or branched polyethylene imine.

The polyalkylene imine will usually have on average from 5 to 500, in particular from 10 to 250 especially from 20 to 100 alkylene imine repeating units, which corresponds to a number average molecular weight of the polyalkylene imine backbone in the range from about 200 to 20000 g/mol, in particular in the range from 400 to 10000 g/mol and especially in the range from 800 to 5000 g/mol.

The polyalkylene imine backbone will generally contribute by an amount of 1 to 25% by weight, in particular from 1.5 to 15% by weight or from 2 to 10% by weight to the total weight of the polymer.

Both moieties P.1 and P.2 are attached to nitrogen atoms of the polyalkylene imine backbone. As these nitrogen atoms are part of a carboxamide or carboximide group, their basicity is low compared to nitrogen atoms of a non-modified polyalkylene imine. It is apparent to a skilled person that polymers of the invention may have nitrogen atoms, which do not carry moieties P.1 and P.2. These nitrogen atoms are basic and susceptible to protonation or quaternization. Polymers of the invention, which have nitrogen atoms, which do not carry moieties P.1 and P.2, will usually have an amine number > 0 mg KOH/g, e.g. in the range from 2 to 150 mg KOH/g, in particular from 5 to 50 mg KOH/g.

As explained above, polymers of the invention, which have an amine number > 0 mg KOH/g, e.g. in the range from 2 to 150 mg KOH/g, in particular from 5 to 50 mg KOH/g are susceptible to protonation or quaternization, which means that at least some of the nitrogen atoms of the polyalkylene imine backbone that do not carry moieties P.1 or P.2, hence amino groups of the polyalkylene imine backbone, can be transformed into cationic, i.e. into protonated or quaternized amino groups. Therefore, one embodiment of the invention relates to polymers, wherein the polyalkylene imine backbone in addition to the moieties P.1 and P.2 has protonated or quaternized amino groups. In this embodiment, the amount of protonated or quaternized amino groups is generally from 0.01 to 0.5 mol/kg.

Another embodiment of the invention relates to polymers, wherein the polyalkylene imine backbone in addition to the moieties P.1 and P.2 does not have quaternized amino groups. In this embodiment, the amount of quaternized amino groups is less than 0.01 mol/kg.

Depending of the type of amino nitrogen atom (primary, secondary, or tertiary), the protonated or quaternized amino groups can be described by the following formulae Q1, Q2 and Q3: 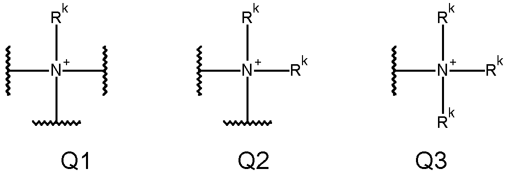 where R^{k} indicates a H (protonized groups Q1, Q2 and Q3) or an optionally substituted hydrocarbon radical such as alkyl, aryl, arylalkyl or cycloalkyl (quaternized groups Q1, Q2 and Q3).

Preferably, R^{k} is selected from the group consisting of
- hydrogen,
- C₁-C₂₀-alkyl, which is unsubstituted or carries 1 or 2 OH groups and wherein 1, 2, 3, or 4 non-adjacent CH₂ groups of C₁-C₂₀-alkyl may be replaced by O,
- C₂-C₂₀-alkenyl, which has 1, 2, 3 or 4 olefinic C=C-double bonds and which is unsubstituted or carries 1 or 2 OH groups,
- aryl, such as phenyl or naphthyl, where the aryl part is unsubstituted or carries 1, 2, 3, 4 or 5 substituents, which are selected from the group consisting of halogen, OH, NO₂, COOH, C₁-C₄-alkyl, C₁-C₄-alkoxy, CONH₂, NH-CHO, and NH-(C=O)-C₁-C₄-alkyl, and
- aryl-CH₂, such as benzyl, 1-naphthylmethyl or 2-naphthylmethyl, where the aryl part is unsubstituted or carries 1, 2, 3, 4 or 5 substituents, which are selected from the group consisting of halogen, OH, NO₂, COOH, C₁-C₄-alkyl, S-C₁-C₄-alkyl, S(O)₂-C₁-C₄-alkyl, C₁-C₄-alkoxy, CONH₂, NH-CHO, and NH-(C=O)-C₁-C₄-alkyl.

In particular R^{k} is selected from the group consisting of
- hydrogen,
- C₁-C₁₀-alkyl, which is unsubstituted or carries 1 or 2 OH groups;
- benzyl, where the phenyl ring part is unsubstituted or carries 1, 2 or 3 substituents, which are selected from the group consisting of halogen, OH, NO₂, C₁-C₄-alkyl and C₁-C₄-alkoxy.

The positive charge of the quaternized or protonized groups is neutralized by suitable anions including halogenide, such as chloride or bromide, sulfate (SO₄²⁻), hydrogensulfate (HSO₄⁻), alkylcarboxylate, such as acetate or propionate, arylcarboxylates, where the aryl ring is unsubstituted or optionally substituted by C₁-C₄-alkyl, C₁-C₄-alkoxy, NO₂, hydroxyl or halogen, such as benzoate, C₁-C₄-alkylbenzoate, 2-hydroxybenzoate, 4-hydroxybenzoate, 1-naphthoate, 2-naphthoate, 2-hydroxy-3-naphthoate, 8-hydroxy-1-naphthoate, C₁-C₄-alkylsulfonate, such as methylsulfonate or ethylsulfonate, C₁-C₄-alkylsulfate such as methyl sulfate or ethyl sulfate, arylsulfonates, where the aryl ring is unsubstituted or optionally substituted by C₁-C₄-alkyl, C₁-C₄-alkoxy, NO₂, hydroxyl or halogen, such as benzene sulfonate, toluene sulfonate or naphthalin sulfonate.

In a preferred embodiment, the at least one monoamine functionalized polyalkyleneoxide is methoxypolyethyleneglycolamine, methoxypolypropyleneglycolamine, methoxypoly(ethylene-co-propylene)glycolamine.

In a preferred embodiment, the at least one aromatic compound is selected from isatoic anhydride and naphthalic anhydride.

Another aspect of the presently claimed invention is directed to a method for preparing the polymer composition of the present invention comprising the steps of
(i) obtaining at least one polyacrylic block copolymer and at least one aromatic based polyalkyleneoxide as defined above, and
(ii) mixing 10 wt% to 90 wt% of the at least one polyacrylic block copolymer and 10 wt% to 90 wt% of the at least one aromatic based polyalkyleneoxide, both based on the total weight of the composition, to obtain the polymer composition,
wherein acrylate monomer, ethylenically unsaturated monomer, R¹, R², R³, X, W1, W2, T, P, A and Q are as defined above.

In an embodiment, the step (ii) of mixing is carried out at a temperature in the range from 30°C to 120°C for a time period in the range from 0.5 h to 24 h.

Yet another aspect of the presently claimed invention is directed to a liquid composition in the form of a dispersion comprising
a. a particulate solid material selected from pigments, silica and fillers, and
b. a liquid diluent comprising the polymer composition according to the presently claimed invention.

In a preferred embodiment, the liquid composition is a millbase.

In a preferred embodiment, the particulate solid material is a pigment.

In a preferred embodiment, the organic pigment (or a mixture of organic pigments), the polymer composition according to the presently claimed invention as a dispersant and a milling liquid such as water (or a mixture of miling liquids), and, optionally, one or more milling additives and/or one or more surface treatment additives are combined in any order. Preferably, all such components are combined prior to the milling such that the total solids content in the milling mixture is at least about 10% by weight (more preferably 20 to 50% by weight).

Milling is carried out using known dry milling methods, such as jet milling, ball milling, and the like, or known wet-milling methods, such as salt kneading, sand milling, bead milling, and the like.

Another aspect of the presently claimed invention is directed to a coating composition comprising the dispersant composition of the presently claimed invention.

In a preferred embodiment, the dispersant composition is a millbase.

It is observed that the liquid compositions comprising the polymer composition of the presently claimed invention have a low millbase viscosity.

In a preferred embodiment, the dispersant composition is a millbase comprising a black pigment.

In a preferred embodiment, the coating composition further comprises at least one additive selected from pigment pastes, binders, fillers, solvents, defoamers, neutralising agent, wetting agent, pigment dispersing agents, preservatives and water.

In a preferred embodiment, the coating composition is water based coating composition comprising waterborne acrylic copolymer dispersion.

Another aspect of the presently claimed invention is directed to use of the polymer composition of the presently claimed invention as a dispersant in a coating composition.

Pigments prepared according to the presently claimed invention are suitable for use in a variety of pigment applications, particularly in view of their excellent dispersibility without sacrificing color properties in wet and/or dried coating systems. Pigments produced from the processes of the present invention are highly dispersible without sacrificing color properties in wet and/or dried coating systems. For example, the conditioned pigments can be dried and used as components in coating systems. Conditioned pigments prepared by the processes of the present invention are readily dispersible, for example, in aqueous coating systems. The conditioned pigments may be mixed with other materials such as pigment formulations (including inorganic white pigments, such as titanium dioxide (rutile), cement, inorganic pigments, flushed pastes with organic liquids or pastes, pigment dispersions with water, dispersants, and, if appropriate, preservatives), coating compositions (including paints, preferably automotive paint, electronic coating paints, physically or oxidatively drying lacquers, stoving enamels, reactive paints, two-component paints, solvent- or water-based paints, emulsion paints for weatherproof coatings and distempers, printing ink, including ink jet inks, or colored paper).

The presently claimed invention offers one or more of the following advantages:
1) The polymer compositions of the presently claimed invention provide coating compositions having a low millbase viscosity.
2) The coating compositions containing the polymer composition of the presently claimed invention provide coating compositions provide coats having improved surface properties such as low crater ranking.
3) The polymer compositions of the presently claimed invention do not adversely affect the color properties of the coating compositions.
4) A low viscosity of the polymer composition of the presently claimed invention leads to a short process time for preparation of the coating compositions and for application of coats on substrates.
5) The polymer composition of the presently claimed invention has a lower cost as compared to the polyacrylic block copolymer alone due to a low cost of the aromatic based polyalkyleneoxide.

In the following, there are provided a list of embodiments to further illustrate the present disclosure without intending to limit the disclosure to specific embodiments listed below.
1. A polymer composition comprising
   a) at least one polyacrylic block copolymer in the range from 10 to 90 wt% based on the total weight of the composition,
      wherein the at least one polyacrylic block copolymer is obtainable by reacting
      i) polymer (A) obtainable by controlled free radical polymerization of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid,
         in the presence of either a1 or in presence of a2,
         wherein
         a1 is at least one nitroxylether of formula (I)

            R¹R²NOX (I),

            and
         a2 is at least one stable free nitroxyl radical of formula (II)

            R¹R²NO• (II);
         wherein
         R¹ and R² are independently selected from substituted or unsubstituted, linear or branched C₅-C₁₈ alkyl, or R¹ and R² together with the nitrogen atom to which they are attached form an unsubstituted or substituted 5- to 10-membered aliphatic ring comprising 1 to 3 heteroatom(s) selected from nitrogen and oxygen, and
         X is selected from -CH₂-phenyl, - CH(CH₃)-phenyl, -C(CH₃)₂-phenyl, -(C₅-C₆cycloalkyl)₂C-CN, -(CH₃)₂CCN, -CH₂CH=CH₂, -CH₃CH-CH=CH₂, -(C₁-C₄alkyl)CR³-C(O)-phenyl, -(C₁-C₄)alkyl-CR³-C(O)-(C₁-C₄)alkoxy, -(C₁-C₄)alkyl-CR³-C(O)-(C₁-C₄)alkyl, -(C₁-C₄)alkyl-CR³-C(O)-N-di(C₁-C₄)alkyl, -(C₁-C₄)alkyl-CR³-C(O)-NH(C₁-C₄)alkyl, and -(C₁-C₄)alkyl-CR³-C(O)-NH₂, wherein R³ is hydrogen or (C₁-C₄)alkyl;
         with
      ii) at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds;
      and
   b) at least one aromatic based polyalkyleneoxide in the range from 10 to 90 wt% based on the total weight of the composition,
      wherein the at least one aromatic based polyalkyleneoxide is obtainable by reacting
      (i) at least one monoamine functionalized polyalkyleneoxide of formula (III)

         T-(O-P)ₙ-NH₂ (III)

         wherein P is a substituted or unsubstituted, linear or branched C₁-C₄ alkylene, or a mixture of C₁-C₄ alkylene, and
         T is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl and n is an integer in the range of 1 to 150;
         with
      (ii) at least one aromatic compound of the formula (IV) 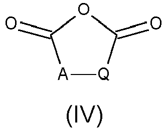 wherein
         - Q: is a chemical bond or a divalent moiety selected from -O-, -NH- and -S-,
         - A: is an unsubstituted or substituted aromatic group selected from the formula

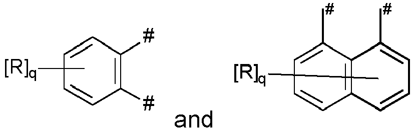

         wherein # indicates the point of attachment to the rest of the molecule, and
         q is 0, 1, 2, 3 or 4,
         Ris independently selected from halogen, NO₂, OH, C₁-C₄-alkyl, C₁-C₄-alkoxy, CONH₂, NH-CHO, NH-C₁-C₄-alkyl, and NH-(C=O)-C₁-C₄-alkyl.
2. The polymer composition according to embodiment 1, wherein the at least one acrylate monomer is n-butyl acrylate, or 2-ethyl hexyl arylate.
3. The polymer composition according to embodiment 1 or 2, wherein the at least one nitroxylether is a compound of formula (la). 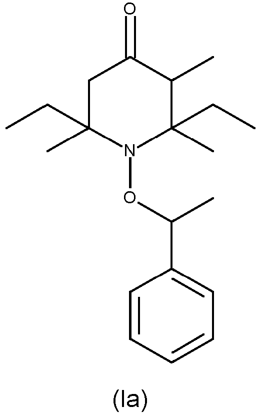
4. The polymer composition according to any of embodiments 1 to 3, wherein the at least one ethylenically unsaturated monomer is selected from isoprene, 1,3-butadiene, α-C₅-C₁₈-alkene, 4-vinyl-pyridine or pyridinium-ion, 2-vinyl-pyridine or pyridinium-ion, vinyl-imidazole or imidazolinium ion, dimethylacrylamide, 3-dimethylaminopropylmethacrylamide, styrene, α-methyl styrene, p-methyl styrene, p-tert-butyl-styrene and
   a compound of formula

      CH₂=C(Rₐ)-(C=Z)-R_{b},
   wherein Rₐ is hydrogen or methyl,
   Z is oxygen or sulfur, and
   R_{b} is selected from NH₂, O⁻(Me⁺), unsubstituted C₁-C₁₈-alkoxy, C₂-C₁₀₀-alkoxy interrupted by at least one nitrogen and/or oxygen atom or hydroxy-substituted C₁-C₁₈ alkoxy, unsubstituted C₁-C₁₈ alkylamino, di(C₁-C₁₈ alkyl)-amino, hydroxy-substituted C₁-C₁₈ alkylamino or hydroxy-substituted di(C₁-C₁₈ alkyl)amino, -O-CH₂-CH₂-N(CH₃)₂ and -O-CH₂-CH₂-N⁺H(CH₃)₂ An-; wherein An- is an anion of a monovalent organic or inorganic acid, and
   Me is a monovalent metal atom or the ammonium ion.
5. The polymer composition according to any of embodiments 1 to 4, wherein the at least one ethylenically unsaturated monomer is selected from 2-vinylpyridine, 4-vinyl-pyridine, 3-diemthylaminopropylmathylacrylamide and dimethlyaminoethyl methacrylate.
6. The polymer composition according to embodiments 1 to 5, wherein the at least one polyacrylic block copolymer is subjected to functionalization with at least one alcohol selected from W1 and W2,
   wherein,
   W1 is R⁴-OH,
   wherein R⁴ is a substituted or unsubstituted, linear or branched C₈-C₃₆ alkyl;
   W2 is at least one polyether alcohol of formula G-(O-Q)ₙ-OH
   wherein G is a substituted or unsubstituted, linear or branched C₁-C₄ alkylene, and
   Q is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl, and n is an integer in the range of 1 to 150.
7. The polymer composition according to embodiment 6, wherein the at least one polyether alcohol is methoxypolyethyleneglycol with the molecular weight (M_{w}) of 200-1000 g/mol.
8. The polymer composition according to any of embodiments 1 to 7, wherein the at least one monoamine functionalized polyalkyleneoxide is methoxypolyethyleneglycolamine, methoxypolypropyleneglycolamine, methoxypoly(ethylene-co-propylene)glycolamine.
9. The polymer composition according to any of embodiments 1 to 8, wherein the at least one aromatic compound is selected from isatoic anhydride and naphthalic anhydride.
10. A method for preparing the polymer composition of any of embodiments 1 to 9 comprising the steps of
   (i) obtaining at least one polyacrylic block copolymer and at least one aromatic based polyalkyleneoxide as defined in any of embodiments 1 to 9, and
   (ii) mixing 10 wt% to 90 wt% of the at least one polyacrylic block copolymer and 10 wt% to 90 wt% of the at least one aromatic based polyalkyleneoxide, both based on the total weight of the composition, to obtain the polymer composition,
   wherein acrylate monomer, ethylenically unsaturated monomer, R¹, R², R³, X, W1, W2, T, P, A and Q are as defined in embodiments 1 to 9.
11. The method according to embodiment 10, wherein the step (ii) of mixing is carried out at a temperature in the range from 30°C to 120°C for a time period in the range from 0.5 h to 24 h.
12. A liquid composition in the form of a dispersion comprising
   a. a particulate solid material selected from pigments, silica and fillers, and
   b. a liquid diluent comprising the polymer composition according to any of embodiments 1 to 9.
13. A coating composition comprising the liquid composition according to embodiment 12.
14. The coating composition according to embodiment 13 further comprising at least one additive selected from pigment pastes, binders, fillers, solvents, defoamers, neutralising agent, wetting agent, pigment dispersing agents, preservatives and water.
15. Use of the polymer composition according to any of embodiments 1 to 9 as a dispersant in a coating composition.

While the presently claimed invention has been described in terms of its specific embodiments, certain modifications and equivalents will be apparent to those skilled in the art and are intended to be included within the scope of the presently claimed invention.

### Examples

The presently claimed invention is illustrated in detail by non-restrictive working examples which follow. More particularly, the test methods specified hereinafter are part of the general disclosure of the application and are not restricted to the specific working examples.

### Materials

| | |
|---|---|
| EFKA^{®} 2550 | defoamer for various water-based coating systems and pigment concentrates; |
| Hydropalat^{®} WE 3370 | fluorcarbon modified polyacrylate used as wetting agent; available from BASF Se. |
| Setaqua^{®} 6801 | waterborne acrylic copolymer dispersion suitable for OEM metal or plastic basecoats available from Allnex. |
| Jeffamine^{®} M 2070 | a relatively hydrophilic polyether monoamine of approximately 2000 molecular weight available from Huntsman. |

### Methods

The molecular weight (M_{w}) was determined according to DIN 55672-1.

The acid number was determined according to DIN 53402:1990-09.

The amine number was determined according to DIN 53176:2002-11.

The viscosity was determined by analogy to DIN 53019-1:2008-09, using a Thermo Haake RheoStress^{®} 600 equipment under the CR mode at 22°C and a shear rate of 1 sec⁻¹ (Spindle CP50).

Jetness (blackness, My) was determined according to DIN 55979.

### Polyacrylic block copolymer dispersant

Intermediate A1 was prepared according to EP1861429B1 Example A3 (Poly(n-BA-MPEGA-b-4-VP).
Intermediate A2 was prepared according to WO08006723A1 Example A15 ((Poly(n-BA-MPEGA-b-4-DMAPMA).

### Aromatic based polyalkyleneoxide dispersant

### Intermediate B1:

A 300 mL four-necked flask equipped with a stirrer, a thermometer and maintained under nitrogen atmosphere, was charged with 150 g Jeffamine^{®} M 2070 (MW of 2000 g/mol), 11.6 g isatoic anhydride with 0.2 g 1,4-diazabicyclo[2.2. 2]octane (DABCO). The reaction mixture was stirred at room temperature for 1h and then the reaction temperature was slowly increased to 100°C and followed by stirring under these conditions for 5h. Intermediate B1 was obtained as a brownish liquid having an amine number of 23 mg KOH/g.

### Intermediate B2:

A 300 mL four-necked flask equipped with a stirrer, a thermometer and maintained under nitrogen atmosphere, was charged with 150 g Jeffamine^{®} M 2070 (MW of 2000 g/mol), 14.1 g 1,8-naphthalic anhydride. The reaction mixture was stirred at 100°C for 5h. Intermediate B2 was obtained as a brownish liquid having an acid number of 20 mg KOH/g.

### Intermediate B3:

A 300 mL four-necked flask equipped with a stirrer, a thermometer and maintained under nitrogen atmosphere, was charged with 150 g Jeffamine^{®} M 2070 (MW of 2000 g/mol), 14.1 g 1,8-naphthalic anhydride. The reaction mixture was stirred at 100°C for 2h. Then, the reaction mixture was heated to 150°C under vacuum for 5h. Intermediate B3 was obtained as a brownish liquid having an acid number of 2 mg KOH/g.

### Dispersant:

The dispersants 1-6 were prepared by blending intermediates A and B mentioned in Table 1 in specified amounts at 80°C under stirring for 3h.

**Table 1: Preparation of Dispersants 1-6**

| Dispersant | Intermediate A | Intermediate B |
|---|---|---|
| 1 | A1, 50g | B1, 50g |
| 2 | A1, 50g | B2, 50g |
| 3 | A1, 50g | B3, 50g |
| 4 | A2, 50g | B1, 50g |
| 5 | A2, 50g | B2, 50g |
| 6 | A2, 50g | B3, 50g |
| 7 | A1, 65g | B1, 35g |
| 8 | A1, 80g | B1, 20g |
| 9 | A1, 65g | B3, 35g |
| 10 | A1, 80g | B3, 20g |
| 11 | A2, 65g | B3, 35g |
| 12 | A1, 35g | B1, 65g |
| 13 | A1, 20g | B1, 80g |
| 14 | A1, 35g | B3, 65g |
| 15 | A1, 20g | B3, 80g |

### Properties of Dispersants

### i) Millbase

In order to test the dispersion effect of the obtained samples, resin free pigment concentrates (millbase) were prepared according to the Formulation 1. The millbase was dispersed in Scandex Shaker for 4 h with the help of glass beads. Afterwards the millbase was filtered and stored at room temperature overnight.

The performance of the dispersants was generally very good with low millbase viscosity **(Table 2).**

### Formulation 1: Water-based Pigment Concentrates

| | | |
|---|---|---|
| 1) | Dispersant (100% solid) | 12 q |
| 2) | Water | 49 g |
| 3) | Colour Black FW 200 | 13 g |
| 4) | Dimethylethanolamine | 0.4 q |
| 5) | EFKA^{®} 2550 | 0.6 q |
| 6) | 2.0 mm glass beads | 150 g |
| | Total | 225 g |

### ii) Paint

The paint was prepared by mix of 2.0 g millbase into 8.0 g let-down system (Formulation 2) via Dispermat^{®} for 2 min at 2000 rpm.

### Formulation 2. Let-down system

| | | |
|---|---|---|
| 1) | Setaqua^{®} 6801 | 64 g |
| 2) | Water | 31 g |
| 3) | Butyl glycol | 4 g |
| 4) | Dimethylethanolamine | 0.5 g |
| 5) | Hydropalat^{®} WE 3370 | 0.5 g |
| | total | 100 g |

### iii) Properties of paint

The paint was applied on polyester film with a 75 µm film thickness. The wet films stand at room temperature for 30 min, followed by 90°C for 30 min.

The dried film was generally very good with satisfactory results **(Table 3).**

**Table 3: properties of the dispersants**

| Example | Millbase viscosity (Viscosity @ 1 S⁻¹) mPas. | Dried film properties | |
|---|---|---|---|
| | | Crater ranking* | Jetness (My) |
| Comparative: Intermediate A1 | 4900 | 3 | 295 |
| Comparative: Intermediate A2: | 5500 | 3 | 300 |
| Dispersant 1 | 350 | 2 | 302 |
| Dispersant 2 | 280 | 1 | 304 |
| Dispersant 3 | 300 | 1 | 308 |
| Dispersant 4 | 500 | 2 | 305 |
| Dispersant 5 | 450 | 1 | 304 |
| Dispersant 6 | 380 | 1 | 307 |
| Dispersant 7 | 2050 | 1 | 298 |
| Dispersant 8 | 2550 | 2 | 296 |
| Dispersant 9 | 1650 | 1 | 300 |
| Dispersant 10 | 1900 | 2 | 298 |
| Dispersant 11 | 2950 | 2 | 301 |
| Dispersant 12 | 280 | 1 | 298 |
| Dispersant 13 | 220 | 2 | 296 |
| Dispersant 14 | 190 | 1 | 299 |
| Dispersant 15 | 150 | 2 | 295 |

| | | | |
|---|---|---|---|
| *: a qualitative ranking from 1 (no visible craters) to 5 (many craters) | | | |

## Claims

1. A polymer composition comprising
a) at least one polyacrylic block copolymer in the range from 10 to 90 wt% based on the total weight of the composition,
wherein the at least one polyacrylic block copolymer is obtainable by reacting
i) polymer (A) obtainable by controlled free radical polymerization of at least one acrylate monomer selected from C₁-C₆ alkyl esters of acrylic acid, C₁-C₆ alkyl esters of methacrylic acid, hydroxy C₁-C₆ alkyl esters of acrylic acid and hydroxy C₁-C₆ alkyl esters of methacrylic acid,
in the presence of either a1 or a2,
wherein
a1 is at least one nitroxylether of formula (I)
R¹R²NOX (I),
and
a2 is at least one stable free nitroxyl radical of formula (II)
R¹R²NO• (II);
wherein
R¹ and R² are independently selected from substituted or unsubstituted, linear or branched C₅-C₁₈ alkyl, or R¹ and R² together with the nitrogen atom to which they are attached form an unsubstituted or substituted 5- to 10-membered aliphatic ring comprising 1 to 3 heteroatom(s) selected from nitrogen and oxygen, and
X is selected from -CH₂-phenyl, - CH(CH₃)-phenyl, -C(CH₃)₂-phenyl, -(C₅-C₆cycloalkyl)₂C-CN, -(CH₃)₂CCN, -CH₂CH=CH₂, -CH₃CH-CH=CH₂, -(C₁-C₄alkyl)CR³-C(O)-phenyl, -(C₁-C₄)alkyl-CR³-C(O)-(C₁-C₄)alkoxy, -(C₁-C₄)alkyl-CR³-C(O)-(C₁-C₄)alkyl, -(C₁-C₄)alkyl-CR³-C(O)-N-di(C₁-C₄)alkyl, -(C₁-C₄)alkyl-CR³-C(O)-NH(C₁-C₄)alkyl, and -(C₁-C₄)alkyl-CR³-C(O)-NH₂, wherein R³ is hydrogen or (C₁-C₄)alkyl;
with
ii) at least one ethylenically unsaturated monomer selected from a C₅-C₂₀ vinylaromatic, an ethylenically unsaturated nitrile, acrylamide, a vinyl halide, a vinyl ether of an C₁-C₁₀ alcohol and an C₂-C₈ aliphatic hydrocarbon having one or two double bonds;
and
b) at least one aromatic based polyalkyleneoxide in the range from 10 to 90 wt% based on the total weight of the composition,
wherein the at least one aromatic based polyalkyleneoxide is obtainable by reacting
(i) at least one monoamine functionalized polyalkyleneoxide of formula (III)
T-(O-P)ₙ-NH₂ (III)
wherein P is a substituted or unsubstituted, linear or branched C₁-C₄ alkylene, or a mixture of C₁-C₄ alkylene, and
T is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl and n is an integer in the range of 1 to 150;
with
(ii) at least one aromatic compound of the formula (IV) 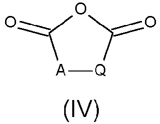 wherein
Q is a chemical bond or a divalent moiety selected from -O-, -NH- and -S-,
A is an unsubstituted or substituted aromatic group selected from the formula 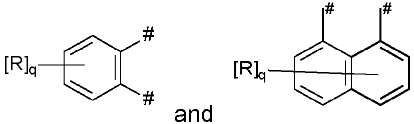
wherein # indicates the point of attachment to the rest of the molecule, and
q is 0, 1, 2, 3 or 4,
Ris independently selected from halogen, NO₂, OH, C₁-C₄-alkyl, C₁-C₄-alkoxy, CONH₂, NH-CHO, NH-C₁-C₄-alkyl, and NH-(C=O)-C₁-C₄-alkyl.

2. The polymer composition according to claim 1, wherein the at least one acrylate monomer is n-butyl acrylate, or 2-ethyl hexyl arylate.

3. The polymer composition according to claim 1 or 2, wherein the at least one nitroxylether is a compound of formula (la).

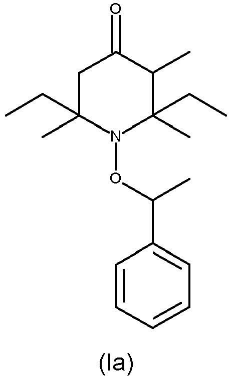

4. The polymer composition according to any of claims 1 to 3, wherein the at least one ethylenically unsaturated monomer is selected from isoprene, 1,3-butadiene, α-C₅-C₁₈-alkene, 4-vinyl-pyridine or pyridinium-ion, 2-vinyl-pyridine or pyridinium-ion, vinyl-imidazole or imidazolinium ion, dimethylacrylamide, 3-dimethylaminopropylmethacrylamide, styrene, α-methyl styrene, p-methyl styrene, p-tert-butyl-styrene and
a compound of formula
CH₂=C(Rₐ)-(C=Z)-R_{b},
wherein Rₐ is hydrogen or methyl,
Z is oxygen or sulfur, and
R_{b} is selected from NH₂, O⁻(Me⁺), unsubstituted C₁-C₁₈-alkoxy, C₂-C₁₀₀-alkoxy interrupted by at least one nitrogen and/or oxygen atom or hydroxy-substituted C₁-C₁₈ alkoxy, unsubstituted C₁-C₁₈ alkylamino, di(C₁-C₁₈ alkyl)-amino, hydroxy-substituted C₁-C₁₈ alkylamino or hydroxy-substituted di(C₁-C₁₈ alkyl)amino, -O-CH₂-CH₂-N(CH₃)₂ and -O-CH₂-CH₂-N⁺H(CH₃)₂ An-; wherein An- is an anion of a monovalent organic or inorganic acid, and Me is a monovalent metal atom or the ammonium ion.

5. The polymer composition according to any of claims 1 to 4, wherein the at least one ethylenically unsaturated monomer is selected from 2-vinylpyridine, 4-vinyl-pyridine, 3-diemthylaminopropylmathylacrylamide and dimethlyaminoethyl methacrylate.

6. The polymer composition according to claims 1 to 5, wherein the at least one polyacrylic block copolymer is subjected to functionalization with at least one alcohol selected from W1 and W2,
wherein,
W1 is R⁴-OH,
wherein R⁴ is a substituted or unsubstituted, linear or branched C₈-C₃₆ alkyl;
W2 is at least one polyether alcohol of formula G-(O-Q)ₙ-OH
wherein G is a substituted or unsubstituted, linear or branched C₁-C₄ alkylene, and
Q is selected from substituted or unsubstituted, linear or branched C₁-C₂₂ alkyl, substituted or unsubstituted C₁-C₂₄ alkylaryl, and substituted or unsubstituted C₁-C₂₄ dialkylaryl, and n is an integer in the range of 1 to 150.

7. The polymer composition according to claim 6, wherein the at least one polyether alcohol is methoxypolyethyleneglycol with the molecular weight (M_{w}) of 200-1000 g/mol.

8. The polymer composition according to any of claims 1 to 7, wherein the at least one monoamine functionalized polyalkyleneoxide is methoxypolyethyleneglycolamine, methoxypolypropyleneglycolamine, methoxypoly(ethylene-co-propylene)glycolamine.

9. The polymer composition according to any of claims 1 to 8, wherein the at least one aromatic compound is selected from isatoic anhydride and naphthalic anhydride.

10. A method for preparing the polymer composition of any of claims 1 to 9 comprising the steps of
(i) obtaining at least one polyacrylic block copolymer and at least one aromatic based polyalkyleneoxide as defined in any of claims 1 to 9, and
(ii) mixing 10 wt% to 90 wt% of the at least one polyacrylic block copolymer and 10 wt% to 90 wt% of the at least one aromatic based polyalkyleneoxide, both based on the total weight of the composition, to obtain the polymer composition,
wherein acrylate monomer, ethylenically unsaturated monomer, R¹, R², R³, X, W1, W2, T, P, A and Q are as defined in claims 1 to 9.

11. A liquid composition in the form of a dispersion comprising
a. a particulate solid material selected from pigments, silica and fillers, and
b. a liquid diluent comprising the polymer composition according to any of claims 1 to 9.

12. A coating composition comprising the liquid composition according to claim 11.

13. The coating composition according to claim 12 further comprising at least one additive selected from pigment pastes, binders, fillers, solvents, defoamers, neutralising agent, wetting agent, pigment dispersing agents, preservatives and water.

14. Use of the polymer composition according to any of claims 1 to 9 as a dispersant in a coating composition.

## Patentansprüche

1. Polymerzusammensetzung umfassend
a) wenigstens ein Polyacrylblockcopolymer in dem Bereich von 10 bis 90 Gew.-% bezogen auf das Gesamtgewicht der Zusammensetzung,
wobei das wenigstens eine Polyacrylblockcopolymer erhältlich ist durch Umsetzung von
i) Polymer (A), erhältlich durch kontrollierte radikalische Polymerisation wenigstens eines Acrylatmonomers ausgewählt aus C₁-C₆-Alkylestern von Acrylsäure, C₁-C₆-Alkylestern von Methacrylsäure, Hydroxy-C₁-C₆-alkylestern von Acrylsäure und Hydroxy-C₁-C₆-alkylestern von Methacrylsäure,
in Gegenwart von a1 oder a2,
wobei
a1 wenigstens ein Nitroxylether der Formel (I) ist
R¹R²NOX (I),
und
a2 wenigstens ein stabiles freies Nitroxylradikal der Formel (II) ist
R¹R²NO• (II);
wobei
R¹ und R² unabhängig ausgewählt sind aus substituiertem oder unsubstituiertem, linearem oder verzweigtem C₅-C₁₈-Alkyl, oder R¹ und R² zusammen mit dem Stickstoffatom, an das sie gebunden sind, einen unsubstituierten oder substituierten 5- bis 10-gliedrigen aliphatischen Ring bilden, der 1 bis 3 Heteroatom(e) ausgewählt aus Stickstoff und Sauerstoff umfasst, und
X ausgewählt ist aus -CH₂-Phenyl, -CH(CH₃)-Phenyl, - C(CH₃)₂-Phenyl, -(C₅-C₆-Cycloalkyl)₂C-CN, -(CH₃)₂CCN, - CH₂CH=CH₂, -CH₃CH-CH=CH₂, -(C₁-C₄-Alkyl)CR³-C(O) -phenyl, - (C₁-C₄)Alkyl-CR³-C(O) -(C₁-C₄)alkoxy, -(C₁-C₄)Alkyl-CR³-C (O) -(C₁-C₄)alkyl, -(C₁-C₄)Alkyl-CR³-C(O) -N-di- (C₁-C₄)alkyl, -(C₁-C₄)Alkyl-CR³-C(O)-NH(C₁-C₄)alkyl und -(C₁-C₄)Alkyl-CR³-C(O)-NH₂, wobei R³ Wasserstoff oder (C₁-C₄)Alkyl ist;
mit
ii) wenigstens einem ethylenisch ungesättigten Monomer ausgewählt aus einem C₅-C₂₀-Vinylaromaten, einem ethylenisch ungesättigten Nitril, Acrylamid, einem Vinylhalogenid, einem Vinylether eines C₁-C₁₀-Alkohols und einem aliphatischen C₂-C₈-Kohlenwasserstoff mit einer oder zwei Doppelbindungen;
und
b) wenigstens ein Polyalkylenoxid auf aromatischer Basis in dem Bereich von 10 bis 90 Gew.-%, bezogen auf das Gesamtgewicht der Zusammensetzung,
wobei das wenigstens eine Polyalkylenoxid auf aromatischer Basis erhältlich ist durch Umsetzung von
(i) wenigstens einem monoaminfunktionalisierten Polyalkylenoxid der Formel (III)
T-(O-P)ₙ-NH₂ (III)
wobei P ein substituiertes oder unsubstituiertes, lineares oder verzweigtes C₁-C₄-Alkylen oder ein Gemisch von C₁-C₄-Alkylen ist, und
T ausgewählt ist aus substituiertem oder unsubstituiertem, linearem oder verzweigtem C₁-C₂₂-Alkyl, substituiertem oder unsubstituiertem C₁-C₂₄-Alkylaryl und substituiertem oder unsubstituiertem C₁-C₂₄-Dialkylaryl und n eine ganze Zahl in dem Bereich von 1 bis 150 ist; mit
(ii) wenigstens einer aromatischen Verbindung der Formel (IV) 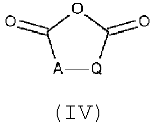 wobei
Q eine chemische Bindung oder eine zweiwertige Einheit ausgewählt aus -O-, -NH- und -S- ist,
A eine unsubstituierte oder substituierte aromatische Gruppe ausgewählt aus der Formel 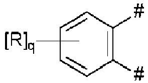 und 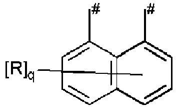 ist,
wobei # den Befestigungspunkt an dem Rest des Moleküls anzeigt und
q 0, 1, 2, 3 oder 4 ist,
R unabhängig ausgewählt ist aus Halogen, NO₂, OH, C₁-C₄-Alkyl, C₁-C₄-Alkoxy, CONH₂, NH-CHO, NH-C₁-C₄-Alkyl und NH-(C=O)-C₁-C₄-Alkyl.

2. Polymerzusammensetzung nach Anspruch 1, wobei das wenigstens eine Acrylatmonomer n-Butylacrylat oder 2-Ethylhexylarylat ist.

3. Polymerzusammensetzung nach Anspruch 1 oder 2, wobei der wenigstens eine Nitroxylether eine Verbindung der Formel (Ia) ist.

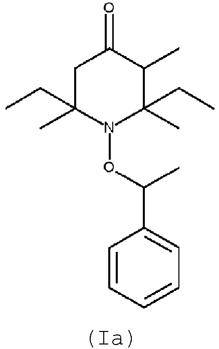

4. Polymerzusammensetzung nach einem der Ansprüche 1 bis 3, wobei das wenigstens eine ethylenisch ungesättigte Monomer ausgewählt ist aus Isopren, 1,3-Butadien, α-C₅-C₁₈-Alken, 4-Vinylpyridin oder -pyridiniumion, 2-Vinylpyridin oder -pyridiniumion, Vinylimidazol oder - imidazoliniumion, Dimethylacrylamid, 3-Dimethylaminopropylmethacrylamid, Styrol, α-Methylstyrol, p-Methylstyrol, p-tert-Butylstyrol und
einer Verbindung der Formel
CH₂=C(Rₐ)- (C=Z) -R_{b},
wobei Rₐ Wasserstoff oder Methyl ist,
Z Sauerstoff oder Schwefel ist, und
R_{b} ausgewählt ist aus NH₂, O⁻(Me⁺), unsubstituiertem C₁-C₁₈-Alkoxy, C₂-C₁₀₀-Alkoxy, unterbrochen durch wenigstens ein Stickstoff- und/oder Sauerstoffatom, oder hydroxysubstituiertes C₁-C₁₈-Alkoxy, unsubstituiertes C₁-C₁₈-Alkylamino, Di (C₁-C₁₈-alkyl) amino, hydroxysubstituiertes C₁-C₁₈-alkylamino oder hydroxysubstituiertes Di (C₁-C₁₈-alkyl) amino, -O-CH₂-CH₂-N(CH₃)₂ und -O-CH₂-CH₂-N⁺H (CH₃)₂ An⁻; wobei An⁻ ein Anion einer einwertigen organischen oder anorganischen Säure ist und Me ein einwertiges Metallatom oder das Ammoniumion ist.

5. Polymerzusammensetzung nach einem der Ansprüche 1 bis 4, wobei das wenigstens eine ethylenisch ungesättigte Monomer ausgewählt ist aus 2-Vinylpyridin, 4-Vinylpyridin, 3-Diemthylaminopropylmethylacrylamid und Dimethlyaminoethylmethacrylat.

6. Polymerzusammensetzung nach den Ansprüchen 1 bis 5, wobei das wenigstens eine Polyacrylblockcopolymer Funktionalisierung mit wenigstens einem Alkohol ausgewählt aus W1 und W2 unterzogen ist,
wobei
W1 R⁴-OH ist,
R⁴ ein substituiertes oder unsubstituiertes, lineares oder verzweigtes C₈-C₃₆-Alkyl ist;
W2 wenigstens ein Polyetheralkohol der Formel G-(O-Q)ₙ-OH ist,
wobei G ein substituiertes oder unsubstituiertes, lineares oder verzweigtes C₁-C₄-Alkylen ist, und
Q ausgewählt ist aus substituiertem oder unsubstituiertem, linearem oder verzweigtem C₁-C₂₂-Alkyl, substituiertem oder unsubstituiertem C₁-C₂₄-Alkylaryl und substituiertem oder unsubstituiertem C₁-C₂₄-Dialkylaryl, und n eine ganze Zahl in dem Bereich von 1 bis 150 ist.

7. Polymerzusammensetzung nach Anspruch 6, wobei der wenigstens eine Polyetheralkohol Methoxypolyethylenglycol mit dem Molekulargewicht (M_{w}) von 200-1000 g/mol ist.

8. Polymerzusammensetzung nach einem der Ansprüche 1 bis 7, wobei das wenigstens eine monoaminfunktionalisierte Polyalkylenoxid Methoxypolyethylenglycolamin, Methoxypolypropylenglycolamin, Methoxypoly(ethylen-copropylen)glycolamin ist.

9. Polymerzusammensetzung nach einem der Ansprüche 1 bis 8, wobei die wenigstens eine aromatische Verbindung ausgewählt ist aus Isatosäureanhydrid und Naphthalsäureanhydrid.

10. Verfahren zur Herstellung der Polymerzusammensetzung nach einem der Ansprüche 1 bis 9, umfassend die Schritte
(i) Erhalten wenigstens eines Polyacrylblockcopolymers und wenigstens eines Polyalkylenoxids auf aromatischer Basis wie in einem der Ansprüche 1 bis 9 definiert, und
(ii) Mischen von 10 Gew.-% bis 90 Gew.-% an dem wenigstens einen Polyacrylblockcopolymer und 10 Gew.-% bis 90 Gew.-% an dem wenigstens einen Polyalkylenoxid auf aromatischer Basis, jeweils bezogen auf das Gesamtgewicht der Zusammensetzung, um die Polymerzusammensetzung zu erhalten,
wobei Acrylatmonomer, ethylenisch ungesättigtes Monomer, R¹, R², R³, X, W1, W2, T, P, A und Q wie in den Ansprüchen 1 bis 9 definiert sind.

11. Flüssige Zusammensetzung in Form einer Dispersion, umfassend
a. ein partikelförmiges festes Material ausgewählt aus Pigmenten, Siliciumdioxid und Füllstoffen, und
b. eine flüssiges Verdünnungsmittel umfassend die Polymerzusammensetzung nach einem der Ansprüche 1 bis 9.

12. Beschichtungszusammensetzung umfassend die flüssige Zusammensetzung nach Anspruch 11.

13. Beschichtungszusammensetzung nach Anspruch 12, ferner umfassend wenigstens einen Zusatzstoff ausgewählt aus Pigmentpasten, Bindemitteln, Füllstoffen, Lösungsmitteln, Entschäumern, Neutralisationsmittel, Netzmittel, Pigmentdispergiermitteln, Konservierungsmitteln und Wasser.

14. Verwendung der Polymerzusammensetzung nach einem der Ansprüche 1 bis 9 als Dispergiermittel in einer Beschichtungszusammensetzung.

## Revendications

1. Composition de polymère comprenant
a) au moins un copolymère séquencé polyacrylique dans la plage de 10 à 90 % en poids par rapport au poids total de la composition,
l'au moins un copolymère séquencé polyacrylique pouvant être obtenu par mise en réaction de
i) polymère (A) pouvant être obtenu par polymérisation par voie radicalaire libre régulée d'au moins un monomère d'acrylate choisi parmi les esters de C₁-C₆ alkyle d'acide acrylique, les esters de C₁-C₆ alkyle d'acide méthacrylique, les esters d'hydroxy C₁-C₆ alkyle d'acide acrylique et les esters d'hydroxy C₁-C₆ alkyle d'acide méthacrylique,
en présence soit de a1, soit de a2,
dans laquelle
a1 est au moins un nitroxyléther de formule (I)
R¹R²NOX (I),
et
a2 est au moins un radical nitroxyle libre stable de formule (II)
R¹R²NO• (II) ;
dans laquelle
R¹ et R² sont indépendamment choisis parmi C₅-C₁₈ alkyle substitué ou non substitué, linéaire ou ramifié, ou R¹ et R² conjointement avec l'atome d'azote auquel ils sont fixés forment un cycle aliphatique non substitué ou substitué à 5 ou 10 chaînons comprenant 1 à 3 hétéroatome(s) choisi(s) parmi azote et oxygène, et
X est choisi parmi -CH₂-phényle, - CH(CH₃)-phényle, - C (CH₃)₂-phényle, - (C₅-C₆cycloalkyl)₂C-CN, - (CH₃)₂CCN, - CH₂CH=CH₂, -CH₃CH-CH=CH₂, - (C₁-C₄alkyl)CR³-C(O) -phényle, - (C₁-C₄)alkyl-CR³-C(O) - (C₁-C₄)alcoxy, - (C₁-C₄)alkyl-CR³-C (O) - (C₁-C₄)alkyle, - (C₁-C₄)alkyl-CR³-C(O) -N-di (C₁-C₄)alkyle, - (C₁-C₄)alkyl-CR³-C(O) -NH (C₁-C₄)alkyle, et - (C₁-C₄)alkyl-CR³-C(O) -NH₂, R³ étant hydrogène ou (C₁-C₄)alkyle ;
avec
ii) au moins un monomère éthyléniquement insaturé choisi parmi un composé vinylaromatique en C₅-C₂₀, un nitrile éthyléniquement insaturé, acrylamide, un halogénure de vinyle, un éther de vinyle d'un C₁-C₁₀ alcool et un hydrocarbure aliphatique en C₂-C₈ ayant une ou deux doubles liaisons ;
et
b) au moins un poly(oxyde d'alkylène) à base aromatique dans la plage de 10 à 90 % en poids par rapport au poids total de la composition,
dans laquelle l'au moins un poly(oxyde d'alkylène) à base aromatique peut être obtenu par réaction de
(i) au moins un poly(oxyde d'alkylène) fonctionnalisé par une monoamine de formule (III)
T-(O-P)ₙ-NH₂ (III)
dans laquelle P est un C₁-C₄ alkylène substitué ou non substitué, linéaire ou ramifié, ou un mélange de C₁-C₄ alkylène, et
T est choisi parmi C₁-C₂₂ alkyle substitué ou non substitué, linéaire ou ramifié, C₁-C₂₄ alkylaryle substitué ou non substitué, et C₁-C₂₄ dialkylaryle substitué ou non substitué et n est un entier dans la plage de 1 à 150 ;
avec
(ii) au moins un composé aromatique de formule (IV) 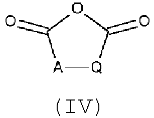 dans laquelle
Q est une liaison chimique ou un groupement divalent choisi parmi -O-, -NH- et -S-,
A est un groupe aromatique substitué ou non substitué choisi parmi les formules 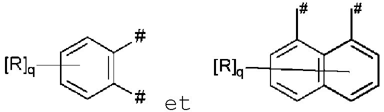
# indiquant le point de fixation au reste de la molécule, et
q est 0, 1, 2, 3 ou 4,
R est indépendamment choisi parmi halogène, NO₂, OH, C₁-C₄-alkyle, C₁-C₄-alcoxy, CONH₂, NH-CHO, NH-C₁-C₄-alkyle, et NH-(C=O)-C₁-C₄-alkyle.

2. Composition de polymère selon la revendication 1, dans laquelle l'au moins un monomère d'acrylate est l'acrylate de n-butyle ou l'arylate de 2-éthylhexyle.

3. Composition de polymère selon la revendication 1 ou 2, dans laquelle l'au moins un nitroxyléther est un composé de formule (Ia).

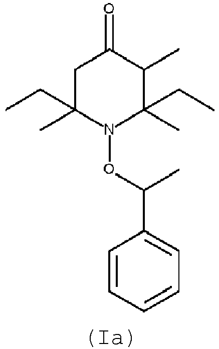

4. Composition de polymère selon l'une quelconque des revendications 1 à 3, dans laquelle l'au moins un monomère éthyléniquement insaturé est choisi parmi l'isoprène, le 1,3-butadiène, l'α-C₅-C₁₈-alcène, la 4-vinylpyridine ou l'ion 4-vinylpyridinium, la 2-vinylpyridine ou l'ion 2-vinylpyridinium, le vinylimidazole ou l'ion imidazolinium, le diméthylacrylamide, le 3-diméthylaminopropylméthacrylamide, le styrène, l'α-méthylstyrène, le p-méthylstyrène, le p-tert-butylstyrène et
un composé de formule
CH₂=C(Rₐ)-(C=Z)-R_{b},
dans laquelle Rₐ est hydrogène ou méthyle,
Z est oxygène ou soufre, et
R_{b} est choisi parmi NH₂, O⁻(Me⁺), C₁-C₁₈-alcoxy non substitué, C₂-C₁₀₀-alcoxy interrompu par au moins un atome d'azote et/ou oxygène ou C₁-C₁₈ alcoxy substitué par hydroxy, C₁-C₁₈ alkylamino non substitué, di(C₁-C₁₈ alkyl)-amino, C₁-C₁₅ alkylamino substitué par hydroxy ou di(C₁-C₁₈ alkyl)amino substitué par hydroxy, -O-CH₂-CH₂-N(CH₃)₂ et -O-CH₂-CH₂-N⁺H(CH₃)₂ An⁻ ; dans laquelle An⁻ est un anion d'un acide organique ou inorganique monovalent, et Me est un atome de métal monovalent ou l'ion ammonium.

5. Composition de polymère selon l'une quelconque des revendications 1 à 4, dans laquelle l'au moins un monomère éthyléniquement insaturé est choisi parmi la 2-vinylpyridine, la 4-vinylpyridine, le 3-diméthylaminopropylméthylacrylamide et le méthacrylate de diméthylaminoéthyle.

6. Composition de polymère selon les revendications 1 à 5, dans laquelle l'au moins un copolymère séquencé polyacrylique est soumis à une fonctionnalisation avec au moins un alcool choisi parmi W1 et W2,
dans laquelle,
W1 est R⁴-OH,
dans laquelle R⁴ est C₈-C₃₆ alkyle substitué ou non substitué, linéaire ou ramifié ;
W2 est au moins un polyéther alcool de formule G-(O-Q)ₙ-OH
dans laquelle G est un C₁-C₄ alkylène substitué ou non substitué, linéaire ou ramifié, et
Q est choisi parmi C₁-C₂₂ alkyle substitué ou non substitué, linéaire ou ramifié, C₁-C₂₄ alkylaryle substitué ou non substitué, et C₁-C₂₄ dialkylaryle substitué ou non substitué, et n est un entier dans la plage de 1 à 150.

7. Composition de polymère selon la revendication 6, dans laquelle l'au moins un polyéther alcool est un méthoxypolyéthylèneglycol ayant le poids moléculaire (M_{w}) de 200-1 000 g/mole.

8. Composition de polymère selon l'une quelconque des revendications 1 à 7, dans laquelle l'au moins un poly(oxyde d'alkylène) fonctionnalisé par une monoamine est une méthoxypolyéthylèneglycolamine, une méthoxypolypropylèneglycolamine, une méthoxypoly(éthylène-co-propylène)glycolamine.

9. Composition de polymère selon l'une quelconque des revendications 1 à 8, dans laquelle l'au moins un composé aromatique est choisi parmi l'anhydride isatoïque et l'anhydride naphtalique.

10. Procédé de préparation de la composition de polymère selon l'une quelconque des revendications 1 à 9 comprenant au moins les étapes de
(i) obtention d'au moins un copolymère séquencé polyacrylique et d'au moins un poly(oxyde d'alkylène) à base aromatique tels que définis dans l'une quelconque des revendications 1 à 9, et
(ii) mélange de 10 % en poids à 90 % en poids de l'au moins un copolymère séquencé polyacrylique et de 10 % en poids à 90 % en poids de l'au moins un poly(oxyde d'alkylène) à base aromatique, tous deux basés sur le poids total de la composition, pour obtenir la composition de polymère,
dans lequel le monomère d'acrylate, le monomère éthyléniquement insaturé, R¹, R², R³, X, W1, W2, T, P, A et Q sont tels que définis dans les revendications 1 à 9.

11. Composition liquide sous la forme d'une dispersion comprenant
a. une matière solide particulaire choisie parmi des pigments, une silice et des charges, et
b. un diluant liquide comprenant la composition de polymère selon l'une quelconque des revendications 1 à 9.

12. Composition de revêtement comprenant la composition liquide selon la revendication 11.

13. Composition de revêtement selon la revendication 12, comprenant en outre au moins un additif choisi parmi des pâtes de pigment, des liants, des charges, des solvants, des antimousses, un agent de neutralisation, un agent mouillant, des agents de dispersion de pigment, des conservateurs et de l'eau.

14. Utilisation de la composition de polymère selon l'une quelconque des revendications 1 à 9 comme dispersant dans une composition de revêtement.
